# EUROPEAN PATENT APPLICATION

(11) **EP 4 804 636 A1**
(43) Date of publication of application: **09.09.2026**
(21) Application number: 24904362.1
(22) Date of filing: 11.12.2024
(51) Int. Cl.: H04W 48/16, H04W 8/00, H04W 76/14, H04W 84/12, H04W 88/06, H04W 80/02

(54) **ELECTRONIC APPARATUS FOR WIRELESS LAN COMMUNICATION AND OPERATING METHOD THEREOF**

(30) Priority: 13.12.2023 KR 20230180816; 11.03.2024 KR 20240033638
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); KIM, Junsung, Suwon-si, Gyeonggi-do 16677 (KR)
(74) Representative: Gulde & Partner
(86) International application number: PCT/KR2024/096668
(87) International publication number: WO 2025/127797

(57) **Abstract**

An embodiment of the present invention relates to an apparatus and a method for wireless LAN communication in an electronic apparatus. The electronic apparatus comprises: a communication circuit; a processor; and a memory. The memory may store instructions that, when executed by the processor, cause the electronic apparatus to: identify channels of a first group for scanning a heterogeneous wireless LAN protocol and channels of a second group for scanning a first external electronic apparatus; on the basis of a time interval for scanning the heterogeneous wireless LAN protocol for the channels of the first group, perform second scheduling for NAN-based data communication with the first external electronic apparatus; perform a scan related to the channels of the first group; and perform, on the basis of the second scheduling, NAN-based data communication with the first external electronic apparatus. Other embodiments may also be possible.

## Description

### [Technical Field]

Embodiments of the disclosure relate to an electronic device for WLAN communication and a method for operating the same.

### [Background Art]

A wireless local area network (WLAN) system may support wireless connections of various electronic devices, such as a smartphone, a tablet personal computer (PC), or a notebook, by using a designated frequency band (e.g., approximately 2.4GHz band, approximately 5GHz band, and/or approximately 6GHz band).

WLAN systems may be installed not only in private spaces such as homes, but also in public spaces such as airports, train stations, offices, or department stores. WLAN systems may be defined by institute of electrical and electronics engineers (IEEE) 802.11 standards. For example, IEEE 802.11 standards are continuously evolving, such as IEEE 802.11b, IEEE 802.11a, IEEE 802.11g, IEEE 802.11n, IEEE 802.11ac, IEEE 802.11ax, and IEEE 802.11be.

The above-described information may be provided as a background art for the purpose of helping the understanding of the disclosure. No claim or decision is raised regarding whether any of the above description is applicable las a prior art related to the disclosure.

### [Disclosure of Invention]

### [Solution to Problem]

An electronic device may perform WLAN communication by using various protocols based on WLAN. For example, the electronic device may perform WLAN communication (e.g., Wi-Fi legacy) in which data is transmitted and/or received with an access point (AP) through a wireless connection with the AP. The electronic device may perform WLAN communication (e.g., Wi-Fi direct) in which data is transmitted and/or received with an external electronic device without network infrastructure equipment (e.g., an access point (AP), a hotspot, or a router). The electronic device may transmit and/or receive data with an external electronic device included in a cluster, based on low-power short-range communication technology based on neighbor awareness networking (NAN) (or Wi-Fi aware). For example, the cluster may refer to a set of electronic devices constituting a proximity network.

In case that the chipset (e.g., Wi-Fi chipset) for WLAN communication includes a multi-core (or multi-baseband core), the electronic device may substantially simultaneously perform WLAN communication in different frequency bands. For example, the electronic device may perform WLAN communication in a first frequency band based on a first WLAN protocol (e.g., NAN) through a first core, and may perform WLAN communication in a second frequency band based on a second WLAN protocol (e.g., Wi-Fi direct or Wi-Fi legacy) through a second core. For example, the multi-core may include multiple cores for processing signals of WLAN communications transmitted and/or received through different frequency bands.

However, the electronic device may have limitations on simultaneous WLAN communication due to restrictions imposed by the operation system (OS) or the chipset for WLAN communication. For example, in case that multiple WLAN protocols use different channels in the same frequency band, the electronic device may perform WLAN communications based on different WLAN protocols through different channels in one core. In case of performing WLAN communications based on different WLAN protocols through different channels in one core, the electronic device may perform WLAN communications based on different WLAN protocols through different time intervals. In this case, the electronic device has limitations on WLAN communication based on the second WLAN protocol during a time interval in which WLAN communication based on the first WLAN protocol is performed.

In case of performing a search (or scan) based on the second WLAN protocol (e.g., Wi-Fi direct) during data communication with an external electronic device based on the NAN communication, the electronic device may allocate at least a part of the time resource (or time interval) for data communication with the external electronic device based on NAN communication as a time resource for a search based on the second WLAN protocol. The electronic device may have limitations on data communication with the external electronic device based on NAN communication during a time interval for a search based on the second WLAN protocol.

An embodiment of the disclosure provides a device and method for performing a search based on a heterogeneous protocol during NAN communication in an electronic device.

Technical problems to be achieved in the disclosure are not limited to the technical problems mentioned above, and other technical problems not mentioned herein will be clearly understood from the following description by those skilled in the art to which the disclosure pertains.

According to an embodiment, an electronic device may include a communication circuit configured to perform WLAN communication, at least one processor, and a memory operatively connected to the at least one processor. According to an embodiment, the memory may store instructions that, when executed individually or collectively by the at least one processor, cause the electronic device to perform data communication based on neighbor awareness networking (NAN) based on first scheduling with a first external electronic device. According to an embodiment, the memory may store instructions that, when executed individually or collectively by at least one processor, cause the electronic device to identify an event related to a scan regarding multiple channels of a heterogeneous WLAN protocol during data communication based on NAN with the first external electronic device. According to an embodiment, the memory may store instructions that, when executed individually or collectively by the at least one processor, cause the electronic device to identify, based on an event, a first group of channels among channels for a scan of the heterogeneous WLAN protocol, and a second group of channels for performing a scan in the first external electronic device, among the channels for a scan of the heterogeneous WLAN protocol. According to an embodiment, the memory may store instructions that, when executed individually or collectively by at least one processor, cause the electronic device to configure a time interval for a scan of the heterogeneous WLAN protocol regarding the first group of channels. According to an embodiment, the memory may store instructions that, when executed individually or collectively by at least one processor, cause the electronic device to perform second scheduling for data communication based on NAN with the first external electronic device, based on the configuration of a time interval for a scan of the heterogeneous WLAN protocol. According to an embodiment, the memory may store instructions that, when executed individually or collectively by at least one processor, cause the electronic device to transmit information requesting a scan of the heterogeneous WLAN protocol regarding the second group of channels to the first external electronic device. According to an embodiment, the memory may store instructions that, when executed individually or collectively by at least one processor, cause the electronic device to perform a scan related to the first group of channels, based on the configuration of a time interval for a scan of the heterogeneous WLAN protocol. According to an embodiment, the memory may store instructions that, when executed individually or collectively by at least one processor, cause the electronic device to acquire, from the first external electronic device, a scan result related to the second group of channels. According to an embodiment, the memory may store instructions that, when executed individually or collectively by at least one processor, cause the electronic device to perform data communication based on NAN with the first external electronic device, based on the second scheduling.

According to an embodiment, a method for operating an electronic device may include an operation of performing data communication based on NAN, based on a first scheduling, with a first external electronic device. According to an embodiment, the method for operating an electronic device may include an operation of identifying an event related to a scan regarding multiple channels of a heterogeneous WLAN protocol during data communication based on NAN with the first external electronic device. According to an embodiment, the method for operating an electronic device may include an operation of identifying, based on an event, a first group of channels among channels for a scan of a heterogeneous WLAN protocol, and a second group of channels for performing a scan in the first external electronic device among channels for a scan of the heterogeneous WLAN protocol. According to an embodiment, the method for operating an electronic device may include an operation of configuring a time interval for a scan of the heterogeneous WLAN protocol, based on the first group of channels. According to an embodiment, the method for operating an electronic device may include an operation of performing second scheduling for data communication based on NAN with the first external electronic device, based on the configuration of a time interval for a scan of the heterogeneous WLAN protocol. According to an embodiment, the method for operating an electronic device may include an operation of transmitting information requesting a scan of the heterogeneous WLAN protocol regarding the second group of channels to the first external electronic device. According to an embodiment, the method for operating an electronic device may include an operation of performing a scan related to the first group of channels, based on the configuration of a time interval for a scan of the heterogeneous WLAN protocol. According to an embodiment, the method for operating an electronic device may include an operation of acquiring a scan result related to the second group of channels from the first external electronic device. According to an embodiment, the method for operating an electronic device may include an operation of performing data communication based on NAN with the first external electronic device, based on the second scheduling.

According to an embodiment, a non-transitory computer-readable storage medium (or computer program product) storing one or more programs may be described. According to an embodiment, the one or more programs may include instructions which, when executed by a processor of an electronic device, cause the electronic device to: perform data communication based on NAN based on first scheduling with a first external electronic device; identify an event related to a scan regarding multiple channels of a heterogeneous WLAN protocol during data communication based on NAN with the first external electronic device; identify, based on the event, a first group of channels, among multiple channels for a scan of the heterogeneous WLAN protocol, and a second group of channels for performing a scan in the first external electronic device, among multiple channels for a scan of the heterogeneous WLAN protocol; configure a time interval for a scan of the heterogeneous WLAN protocol regarding the first group of channels; perform second scheduling for data communication based on NAN with the first external electronic device, based on configuration of a time interval for a scan of the heterogeneous WLAN protocol; transmit information requesting a scan of the heterogeneous WLAN protocol regarding the second group of channels to the first external electronic device; perform a scan related to the first group of channels, based on configuration of a time interval for a scan of the heterogeneous WLAN protocol; acquire a scan result related to the second group of channels from the first external electronic device; and perform data communication based on NAN with the first external electronic device, based on the second scheduling.

According to an embodiment of the disclosure, in case of performing a search based on a second WLAN protocol (e.g., Wi-Fi direct or Wi-Fi legacy) during data communication with an external electronic device based on a first WLAN protocol (e.g., NAN), the electronic device may perform a search regarding channels related to the second WLAN protocol with the external electronic device in a split manner, thereby relatively increasing the efficiency of data communication based on the first WLAN protocol and relatively increasing the search speed based on the second WLAN protocol.

Various other advantageous effects identified explicitly or implicitly through the disclosure may be provided.

Advantageous effects which may be obtained in the embodiments of the disclosure are not limited to the above-mentioned advantageous effects, and other advantageous effects which are not mentioned herein may be clearly understood from the following description by those skilled in the art to which the embodiments of the disclosure pertain.

### [Brief Description of Drawings]

With regard to the description of the drawings, identical or similar components may be referred to by identical or similar reference numerals.
FIG. 1 is a block diagram of an electronic device in a network environment according to an embodiment.
FIG. 2 is a diagram illustrating a NAN cluster according to an embodiment.
FIG. 3 is a diagram illustrating a protocol for transmitting a signal of an electronic device included in a NAN cluster according to an embodiment.
FIG. 4 is a diagram illustrating an example of data transmission and/or reception in a NAN cluster according to an embodiment.
FIG. 5 is a block diagram of an electronic device for WLAN communication according to an embodiment.
FIG. 6 is a block diagram of a communication circuit for WLAN communication according to an embodiment.
FIG. 7 is a flowchart for performing data communication based on a first WLAN protocol and searching based on a second WLAN protocol in an electronic device according to an embodiment.
FIG. 8A is a flowchart for identifying a channel for performing a search based on a second WLAN protocol in an electronic device according to an embodiment.
FIG. 8B is a flowchart for identifying a channel for performing a search based on a second WLAN protocol in an electronic device according to an embodiment.
FIG. 8C is a flowchart for identifying a channel for performing a search based on a second WLAN protocol in an electronic device according to an embodiment.
FIG. 9 is a flowchart for performing scheduling based on a second WLAN protocol in an electronic device according to an embodiment.
FIG. 10 is a flowchart for outputting a scan result based on a second WLAN protocol in an electronic device according to an embodiment.
FIG. 11 illustrates an example of performing data communication based on a first WLAN protocol and search based on a second WLAN protocol in an electronic device according to an embodiment.
FIG. 12 is an example for performing data communication based on a first WLAN protocol and search based on a second WLAN protocol in an electronic device according to an embodiment.
FIG. 13 is an example for performing data communication based on a first WLAN protocol and search based on a second WLAN protocol in an electronic device according to an embodiment.
FIG. 14 illustrates an example for performing data communication based on a first WLAN protocol and a search based on a second WLAN protocol in an electronic device according to an embodiment.
FIG. 15 illustrates an example for performing a search based on a second WLAN protocol with an external electronic device in an electronic device according to an embodiment.
FIG. 16 is an example of performing search based on a second WLAN protocol with external electronic devices in an electronic device according to an embodiment.
FIG. 17 is a flowchart for restoring scheduling for data communication based on a first WLAN protocol in an electronic device according to an embodiment.

### [Mode for the Invention]

Hereinafter, embodiments will be described in detail with reference to the accompanying drawings.

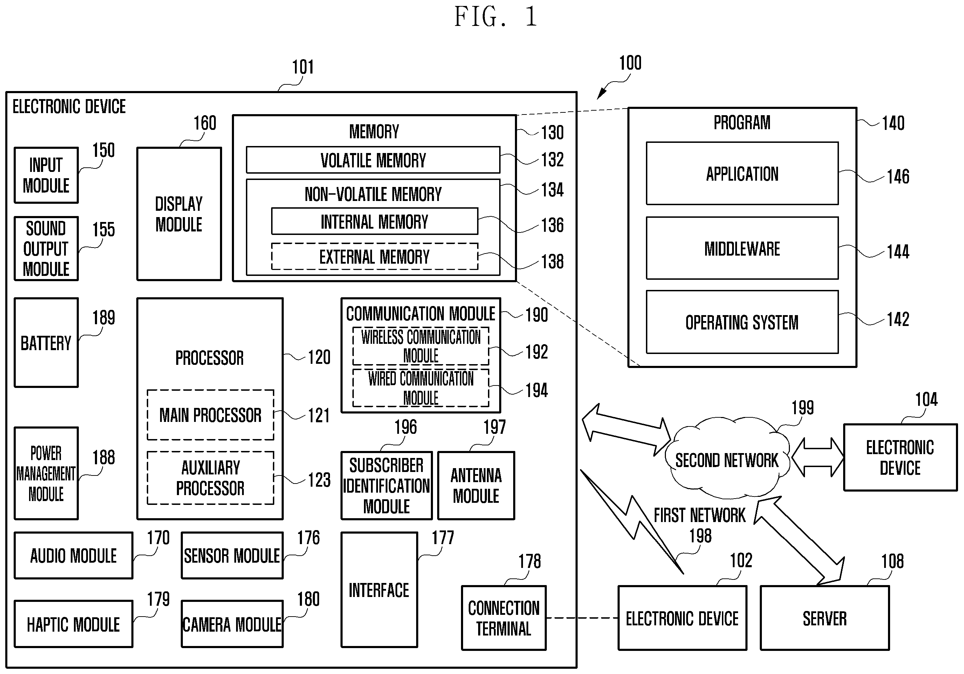

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

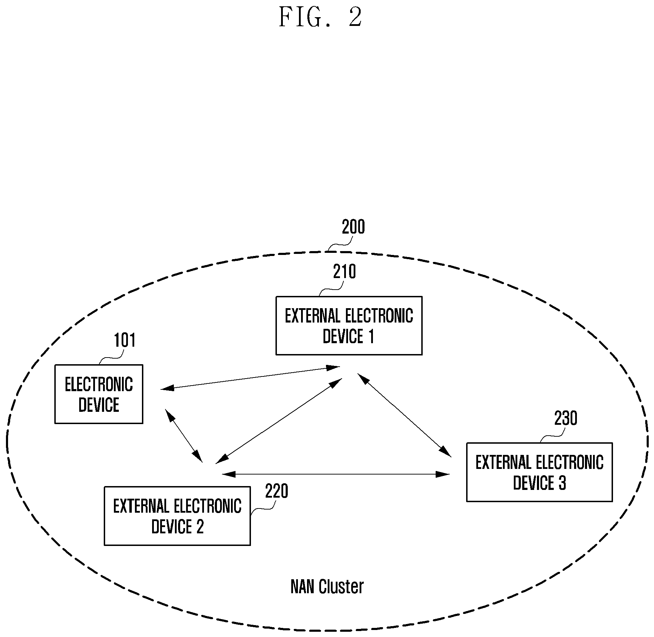

FIG. 2 is a diagram illustrating a neighbor awareness network (NAN) cluster according to various embodiments.

According to various embodiments, FIG. 2 is a diagram illustrating an example of the configuration of a NAN cluster 200 for a proximity network. According to one embodiment, the NAN cluster 200 may mean a set of electronic devices 101, 210, 220, and/or 230 that establish a proximity network so that the respective electronic device (or NAN devices) 101, 210, 220, and/or 230 can transmit and/or receive data to each other.

According to various embodiments, the NAN cluster 200 may include a plurality of electronic devices 101, 210, 220, and/or 230. The electronic devices 101, 210, 220 and/or 230 included in the NAN cluster 200 may transmit and/or receive a beacon (or synchronization beacon, discovery beacon), a service discovery frame (SDF), and/or a NAN action frame (NAF) within a synchronized time duration (or communication period) (e.g., a discovery window (DW)).

According to various embodiments, the electronic devices 101, 210, 220, and/or 230 within the NAN cluster 200 may have their time clocks synchronized with each other. For example, the electronic devices 101, 210, 220, and/or 230 may be synchronized to the time clock of one electronic device (e.g., the electronic device 101), and transmit and/or receive a beacon, an SDF, and/or an NAF in the synchronized (or same) discovery window.

According to one embodiment, the electronic device 101 supporting a low-power short-range communication technology based on NAN may broadcast a search signal (e.g., a beacon) to discover at least one of external electronic devices 210, 220, and/or 230 every predetermined first period (e.g., about 100 msec), and perform scanning every predetermined second period (e.g., about 10 msec) to receive the search signal broadcast from at least one of the external electronic devices 210, 220, and/or 230.

According to one embodiment, the electronic device 101 may detect at least one of external electronic device 210, 220 and/or 230 located around the electronic device 101 based on the search signal received through scanning, and perform NAN cluster synchronization with the detected at least one of external electronic device 210, 220 and/or 230. The NAN cluster synchronization may include an operation of receiving time clock information of an electronic device (e.g., the electronic device 101) representing a NAN cluster so that the electronic devices 101, 210, 220 and/or 230 included in the NAN cluster transmit and/or receive data on the same channel and/or during the same time.

According to one embodiment, each of the plurality of electronic devices 101, 210, 220 and/or 230 may form a single NAN cluster 200 that operates according to the synchronized time clock by transmitting a beacon and receiving a beacon from other electronic devices 101, 210, 220 and/or 230. The electronic devices 101, 210, 220 and/or 230 included in the NAN cluster 200 may perform NAN cluster synchronization (e.g., time and/or channel synchronization).

According to various embodiments, NAN cluster synchronization may be performed based on the time and channel of the electronic device (e.g., the electronic device 101) with the highest master preference within the NAN cluster 200. For example, the electronic devices 101, 210, 220, and/or 230 included in the NAN cluster 200 formed through discovery may exchange signals related to master preference information indicating a preference for operating as an anchor master device. The electronic devices 101, 210, 220, and/or 230 included in the NAN cluster 200 may determine the electronic device (e.g., the electronic device 101) with the highest master preference as an anchor master device (or a master electronic device) through the signals related to the master preference information.

According to various embodiments, the anchor master device (e.g., the electronic device 101) may mean an electronic device that serves as a reference for time and channel synchronization of the electronic devices 101, 210, 220, and/or 230 included in the NAN cluster 200. The anchor master device may be changed according to the master preference of the electronic devices 101, 210, 220, and/or 230. Each of the time and channel synchronized electronic devices 101, 210, 220, and/or 230 may transmit a beacon and/or an SDF within a discovery window (or a search period) that is repeated according to a predetermined cycle, and receive the beacon and the SDF from the other electronic devices 101, 210, 220, and/or 230 within the NAN cluster 200. In one embodiment, the beacon may be transmitted and/or received periodically every discovery window to continuously maintain time and channel synchronization of the electronic devices 101, 210, 220, and/or 230 within the NAN cluster 200. The SDF may be transmitted and/or received within the discovery window as needed to provide services to the discovered electronic devices 101, 210, 220, and/or 230. According to one embodiment, among the time and channel synchronized electronic devices 101, 210, 220, and/or 230, the electronic device (e.g., the electronic device 101) operating as the anchor master device may transmit a beacon (e.g., discovery beacon) during the interval between the discovery windows to detect new electronic devices.

According to one embodiment, each of the NAN cluster-synchronized (e.g., time and/or channel-synchronized) electronic devices 101, 210, 220, and/or 230 may transmit a NAN action frame (NAF) and receive NAFs from other electronic devices 101, 210, 220, and/or 230 within the NAN cluster 200 during a discovery window (or search interval) that repeats according to a predetermined cycle. For example, the NAF may include at least one of information related to configuring of a NAN data path (NDP), information related to scheduling update, or information related to NAN ranging to perform data communication in the interval between the discovery windows. For example, the NAF may control scheduling of wireless resources for coexistence of NAN operation and non-NAN operation (e.g., Wi-Fi Direct, mesh, IBSS, WLAN, Bluetooth, or NFC). The NAF may include time and/or channel information available for NAN communication.

According to various embodiments, each of the electronic devices 101, 210, 220, and/or 230 included in the NAN cluster 200 may operate in an active state only during the discovery window, and operate in a low-power state (e.g., a sleep state) during the remaining interval other than the discovery window, thereby reducing current consumption.

According to one embodiment, the discovery window is a period (e.g., in milliseconds) during which the electronic device 101, 210, 220, or 230 enters an active (or wake-up) state, consuming a significant amount of power. However, in the interval other than the discovery window, the electronic device 101, 210, 220, or 230 remains in a sleep state, enabling low-power discovery.

According to various embodiments, the electronic devices 101, 210, 220 and/or 230 included in the NAN cluster 200 may be simultaneously activated at the start time of the synchronized discovery window (e.g., DW start) and simultaneously transition to a sleep state at the end time of the discovery window (e.g., DW end).

According to various embodiments, each of the electronic devices 101, 210, 220, and/or 230 included in the NAN cluster 200 may transmit and/or receive data not only in the discovery window but also in the interval between the discovery windows. According to one embodiment, the electronic devices 101, 210, 220, and/or 230 included in the NAN cluster 200 may perform additional communication by configuring an active time slot in the interval between the discovery windows. For example, electronic devices 101, 210, 220 and/or 230 included in the NAN cluster 200 may transmit and/or receive SDFs that were not transmitted and/or received within the discovery window, through the active time slot. For example, the electronic devices 101, 210, 220 and/or 230 included in the NAN cluster 200 may perform NAN communication and/or non-NAN communication during the active time slot by configuring (or designating) a NAN communication operation period and/or a non-NAN communication operation period during the active time slot.

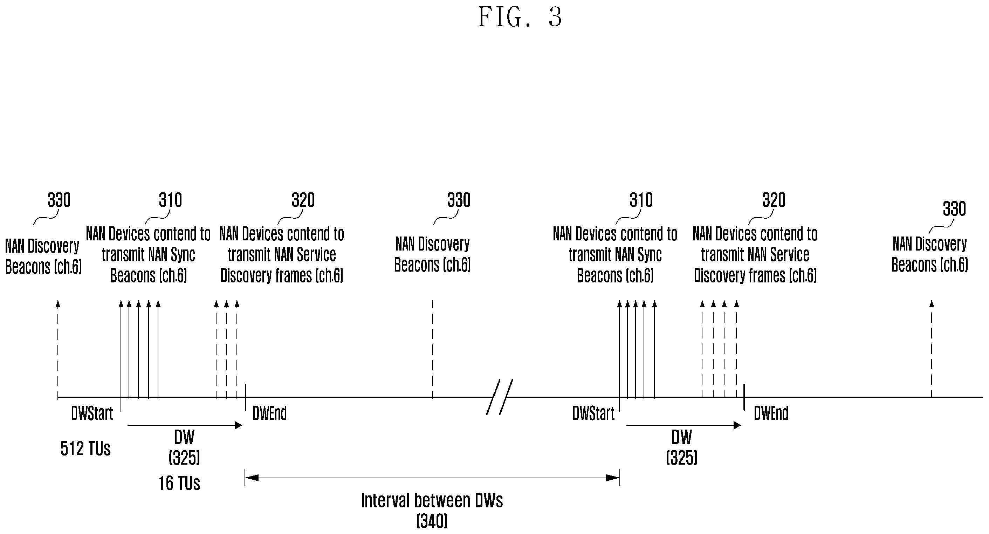

According to various embodiments, the electronic devices 101, 210, 220, and/or 230 included in the NAN cluster 200 may perform discovery, synchronization, and/or data exchange operations using a protocol illustrated in FIG. 3 described below.

FIG. 3 is a diagram illustrating a protocol for transmitting signals of an electronic device included in a NAN cluster according to various embodiments. According to various embodiments, FIG. 3 is a diagram illustrating an example of a discovery window. In FIG. 3, it may be illustrated that electronic devices (e.g., the electronic devices 101, 210, 220, and/or 230 of FIG. 2) included in one NAN cluster (e.g., the NAN cluster 200 of FIG. 2) transmit signals through a specific channel (e.g., channel 6 (Ch6) and/or channel 149 (Ch149)) based on a NAN standard.

According to various embodiments, the electronic devices 101, 210, 220 and/or 230 included in one NAN cluster (e.g., the NAN cluster 200 of FIG. 2) may transmit a sync beacon 310 and an SDF 320 in a synchronized discovery window 325. A discovery beacon 330 may be transmitted by at least one electronic device 101, 210, 220 and/or 230 in another interval 340 (e.g., an interval between discovery windows) other than the discovery window 325. According to one embodiment, the electronic devices 101, 210, 220 and/or 230 may transmit the sync beacon 310 and the SDF 320 on a contention basis. For example, the sync beacon 310 and the SDF 320 may be transmitted on the contention basis between the respective electronic devices 101, 210, 220 and/or 230 belonging to a NAN cluster (e.g., the NAN cluster 200 of FIG. 2).

According to various embodiments, the electronic devices 101, 210, 220, and/or 230 included in one NAN cluster (e.g., the NAN cluster (200) of FIG. 2) may transmit and/or receive NAFs in the discovery window 325. For example, the NAF may include at least one of information related to configuring of a NAN data path (NDP), information related to scheduling update, or information related to NAN ranging to perform data communication in the interval (340) between the discovery windows (325).

According to various embodiments, the discovery window 325 may be a period during which the electronic devices 101, 210, 220, and/or 230 is activated from communication idle state (e.g., a sleep state) that is a power-saving mode, to communication state (e.g., a wake-up state) for the purpose of data exchange between the electronic devices 101, 210, 220, and/or 230. For example, the discovery window 325 may be divided into time units (TUs) which are millisecond units. According to one embodiment, the discovery window 325 for transmitting and receiving the sync beacon 310 and the SDF 320 may occupy 16 time units (16 TUs) and may have a cycle (or interval) that repeats with 512 time units (512 TUs).

According to various embodiments, the discovery beacon 330 may represent a signal transmitted so that other electronic devices that have not joined the NAN cluster (e.g., the NAN cluster 200 of FIG. 2) can discover the NAN cluster. For example, the discovery beacon 330 is a signal for notifying the existence of the NAN cluster, and the electronic devices that have not joined the NAN cluster may perform passive scanning to receive the discovery beacon 330, thereby discovering and joining the NAN cluster.

According to various embodiments, the discovery beacon 330 may include information necessary to synchronize with the NAN cluster (e.g., the NAN cluster 200 of FIG. 2). For example, the discovery beacon 330 may include at least one of a frame control (FC) field indicating the function of a signal (e.g., a beacon), a broadcast address, a media access control (MAC) address of a transmission electronic device, a cluster identifier (ID), a sequence control field, a time stamp for a beacon frame, a beacon interval indicating a transmission interval of the discovery beacon 330, or capability information about an electronic device transmitting the discovery beacon 330.

According to various embodiments, the discovery beacon 330 may include at least one proximity network (or NAN cluster) related information element. In one embodiment, the proximity network-related information may be referred to as attribute information.

According to various embodiments, the sync beacon 310 may indicate a signal for maintaining synchronization between the sync electronic devices 101, 210, 220, and/or 230 within the NAN cluster (e.g., the NAN cluster 200 of FIG. 2). The sync beacon 310 may be transmitted by the sync device among the electronic devices 1101, 210, 220, and/or 230 within the NAN cluster. For example, the sync device may include an anchor master device, a master device, or a non-master sync device defined in the NAN standard.

According to various embodiments, the sync beacon 310 may include information necessary for the electronic devices 101, 210, 220, and/or 230 to be synchronized within the NAN cluster (e.g., the NAN cluster 200 of FIG. 2). For example, the sync beacon 310 may include at least one of an FC field indicating the function of a signal (e.g., a beacon), a broadcast address, a MAC address of a transmission electronic device, a cluster ID, a sequence control field, a timestamp for a beacon frame, a beacon interval indicating the interval between the start points of the discovery windows 325, or capability information for a transmission electronic device. According to one embodiment, the sync beacon 310 may include at least one proximity network (or NAN cluster) related information element. For example, the proximity network-related information may include contents for a service provided through the proximity network.

According to various embodiments, the SDF 320 may represent a signal for exchanging data through the proximity network. According to one embodiment, the SDF 320 represents a vendor specific public action frame and may include various fields. For example, the SDF 320 may include a category or action field and include at least one piece of proximity network-related information.

According to various embodiments, the sync beacon 310, the SDF 320, and the discovery beacon 330 may include proximity network-related information. In one embodiment, the proximity network-related information may include an ID indicating a type of information, a length of the information, and a body field that is the corresponding information. According to one embodiment, the corresponding information may include at least one piece of master indication information, cluster information, service ID list information, service descriptor information, connection capability information, wireless LAN infrastructure information, peer to peer (P2P) operation information, independent basic service set (IBSS) information, mesh information, further proximity network service discovery information, further availability map information, country code information, ranging information, cluster discovery information, or vendor specific information.

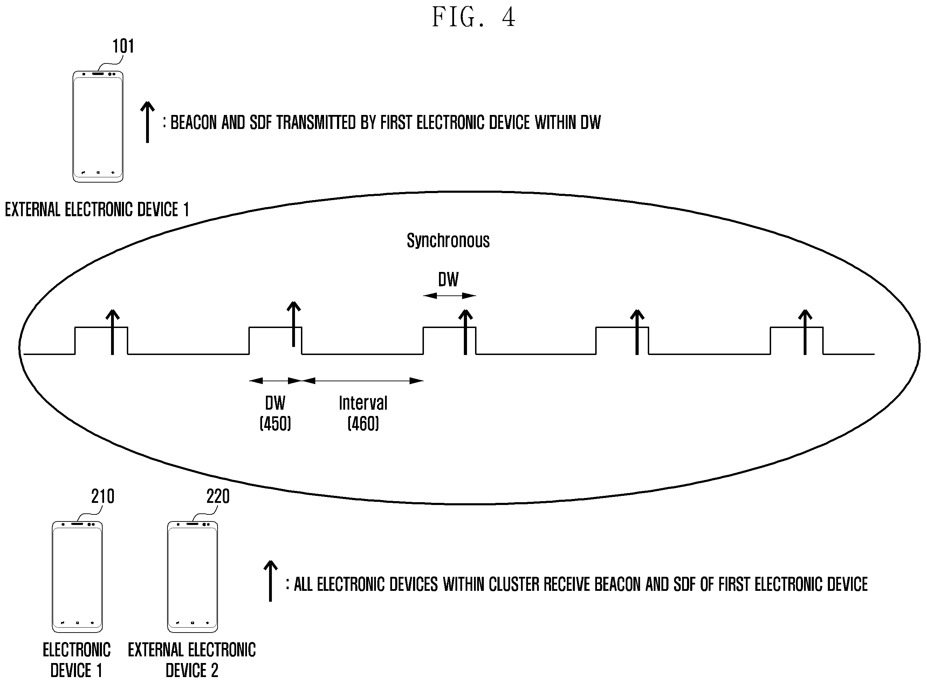

FIG. 4 is a diagram illustrating an example of data transmission and/or reception within a NAN cluster according to various embodiments.

According to various embodiments, FIG. 4 illustrates an example in which an electronic device 101, an external electronic device 1 210, and an external electronic device 2 220 form a single NAN cluster (e.g., the NAN cluster 200 of FIG. 2) through a wireless short-range communication technology, and each of the electronic devices 101, 210, and/or 220 may transmit and/or receive a beacon, an SDF, and/or an NAF to each other. According to one embodiment, FIG. 4 illustrates an example in which the electronic device 101 among the electronic devices 101, 210, and/or 220 forming the NAN cluster performs the role of a master electronic device.

According to various embodiments, the electronic device 101 may transmit a beacon, an SDF, and/or an NAF within a discovery window 450. The electronic device 101 may broadcast the beacon, the SDF, and/or the NAF every discovery window 450 that is repeated every predetermined interval (e.g., interval 460).

According to various embodiments, the external electronic device 1 210 and the external electronic device 2 220 may receive the beacon, the SDF, and/or the NAF transmitted by the electronic device 101. According to one embodiment, each of the external electronic device 1 210 and the external electronic device 2 220 may receive the broadcast beacon, the SDF, and/or the NAF from the electronic device 101 every discovery window 450.

According to various embodiments, the beacon transmitted within the discovery window 450 may include a sync beacon and include information for maintaining synchronization between the electronic devices 101, 210, and/or 220. For example, the external electronic device 1 210 and/or the external electronic device 2 220 may perform NAN cluster synchronization based on time clock information of the electronic device 101 included in the beacon transmitted by the electronic device 101 operating as a master. The external electronic device 1 210 and/or the external electronic device 2 220 may be synchronized based on the time clock information of the electronic device 101, so that the discovery window 450 may be activated at the same time.

According to various embodiments, in an interval other than the discovery window 450 (e.g., interval 460), the electronic devices 101, 210, and/or 220 may maintain communication idle state (e.g., a sleep state) to reduce current consumption. According to one embodiment, the electronic devices 101, 210, and/or 220 may operate in communication state (e.g., a wake state) only in the discovery window 450 based on a synchronized time clock to reduce current consumption.

According to various embodiments, in the interval other than the discovery window 450 (e.g., interval 460), the electronic devices 101, 210 and/or 220 may perform additional communication by configuring an active time slot. According to one embodiment, the electronic devices 101, 210 and/or 220 may transmit and/or receive SDFs that were not transmitted and/or received within the discovery window 450 through the active time slot. According to one embodiment, the electronic devices 101, 210 and/or 220 may perform a connection using legacy Wi-Fi or discovery operation through the active time slot by designating an operation for Wi-Fi Direct, mesh, IBSS, WLAN, Bluetooth or NFC connection in the active time slot.

In the following description, the electronic device 101 performs a scan based on a second WLAN protocol in cooperation with external electronic device 1 210, but is not limited thereto, and may performs a scan based on a second WLAN protocol in cooperation with multiple external electronic devices.

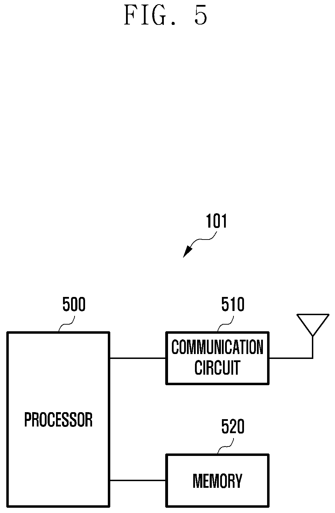

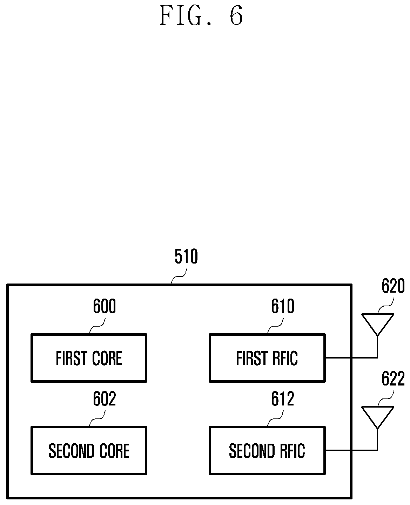

FIG. 5 is a block diagram of an electronic device for WLAN communication according to an embodiment. FIG. 6 is a block diagram of a communication circuit for WLAN communication according to an embodiment. For example, the electronic device 101 in FIG. 5 may be at least partially similar to the electronic device 101 in FIG. 1, FIG. 2, FIG. 3, or FIG. 4 or may include another embodiment of the electronic device. For example, the external electronic device may include the same components as the electronic device in FIG. 5 and/or FIG. 6, or may include at least some similar components.

According to an embodiment, referring to FIGS. 5 and 6, the electronic device 101 may include at least one of a processor 500, a communication circuit (or communication circuitry) 510, or memory 520. For example, the processor 500 may be substantially identical to the processor 120 in FIG. 1 or may be included in the processor 120. The communication circuit 510 may be substantially identical to the radio communication module 192 in FIG. 1 or may be included in the radio communication module 192. The memory 520 may be substantially identical to the memory 130 in FIG. 1 or may be included in the memory 130. For example, the processor 500 may include at least one of an application processor or a communication processor. For example, the processor 500 may be connected to at least one of the communication circuit 510 or the memory 520 operatively, functionally, and/or electrically. For example, the processor 500 may include at least one processor including processing circuitry.

According to an embodiment, the communication circuit 510 may support WLAN communication between the electronic device 101 and an external electronic device (e.g., the external electronic devices 210, 220, and/or 230 in FIG. 2, FIG. 3, or FIG. 4). For example, the communication circuit 510 may include one core for processing baseband signals for WLAN communication and one radio frequency integrated circuit (RFIC) for processing radio frequency (RF) signals for WLAN communication. For example, the core of the communication circuit 510 may process baseband signals in at least one of about 2.4GHz frequency band, about 5GHz frequency band, or about 6GHz frequency band. For example, the RFIC of the communication circuit 510 may process RF signals in at least one of about 2.4GHz frequency, about 5GHz frequency, or about 6GHz, which are transmitted and/or received through at least one antenna.

For example, the communication circuit 510 may include multiple cores 600 and 602 for processing baseband signals for WLAN communication and multiple radio frequency integrated circuits (RFICs) 610 and 612 for processing radio frequency (RF) signals for WLAN communication, as in FIG. 6. For example, the communication circuit 510 in FIG. 6 may include two cores 600 and 602. However, the number of cores included in the communication circuit 510 is not limited thereto, and three or more cores may be included.

For example, the first core (or first communication circuit) 600 and the second core (or second communication circuit) 602 may process baseband signals for WLAN communication transmitted and/or received through different frequency bands. For example, the first core 600 may process baseband signals in about 2.4GHz band and/or about 5GHz band. For example, the second core 602 may process baseband signals in about 5GHz band and/or about 6GHz band. For example, the first core 600 and the second core 602 may be logically (e.g., software) distinguished within one hardware device. For example, the first core 600 and the second core 602 may be configured by different circuits or different pieces of hardware.

For example, the first RFIC 610 and the second RFIC 612 may process RF signals for WLAN communication transmitted and/or received through different frequency bands. For example, the first RFIC 610 may process RF signals in about 2.4 GHz and/or about 5 GHz band transmitted and/or received through the first antenna 620. For example, the second RFIC 612 may process RF signals in about 5GHz band and/or about 6GHz band transmitted and/or received through the second antenna 622. For example, the first RFIC 610 and the second RFIC 612 may be configured by different circuits or different pieces of hardware.

According to an embodiment, the communication circuit 510 may support multiple WLAN protocols. For example, the communication circuit 510 may perform WLAN communication with an external electronic device, based on a first WLAN protocol. For example, the first WLAN protocol may include NAN communication. For example, the communication circuit 510 may perform WLAN communication with an external electronic device, based on a second WLAN protocol. For example, the second WLAN protocol may be a heterogeneous WLAN protocol different from the first WLAN protocol, and may include at least one of WLAN-based direct communication (e.g., Wi-Fi direct), a mobile hotspot, or Wi-Fi legacy. For example, Wi-Fi legacy may include a communication scheme in which the electronic device 101 performs WLAN communication through an access point (AP). For example, the electronic device 101 may operate in a station mode (STA mode) for connecting to an access point (AP) in Wi-Fi legacy.

According to an embodiment, the processor 500 may control the communication circuit 510 to perform data communication with an external electronic device, based on the first WLAN protocol. For example, the processor 500 may control the communication circuit 510 to configure a NAN data path (NDP) with external electronic device 1 210 included in the same NAN cluster as the electronic device 101, through first scheduling using a NAN action frame (NAF) within a discovery window. For example, the NAN data path may be configured based on information related to setup of a NAN data path (NDP) transmitted and/or received by the electronic device 101 and external electronic device 1 210 through a NAN action frame. For example, the NAN data path may denote a path (e.g., time resource and/or frequency resource) for data communication between the electronic device 101 and external electronic device 1 210 included in the same NAN cluster in intervals between discovery windows.

For example, the processor 500 may control the communication circuit 510 to perform at least one of data transmission or reception with external electronic device 1 210 through a NAN data path (NDP) (e.g., time resource and/or frequency resource) configured between discovery windows.

According to an embodiment, the processor 500 may identify whether an event related to a scan (or search) based on the second WLAN protocol occurs during data communication with an external electronic device based on the first WLAN protocol. For example, an event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol.

According to an embodiment, the processor 500 may identify whether a cooperative scan related to the second WLAN protocol may be performed with external electronic device 1 210, which is performing data communication based on the first WLAN protocol with the electronic device 101. For example, in case that external electronic device 1 210 which is performing data communication based on the first WLAN protocol with the electronic device 101 supports a cooperative scan related to the second WLAN protocol, the processor 500 may determine that a cooperative scan related to the second WLAN protocol may be performed with external electronic device 1 210. For example, whether external electronic device 1 210 supports a cooperative scan may be identified before or after an event related to a scan based on the second WLAN protocol occurs. For example, a cooperative scan may be a scheme in which external electronic device 1 210 and the electronic device 101 perform a scan based on the second WLAN protocol together, and may include a series of operations in which the electronic device 101 performs a search regarding channels included in a first group among channels (or frequencies) for a scan based on the second WLAN protocol, and external electronic device 1 210 performs a search regarding channels included in a second group different from the first group.

For example, the processor 500 may identify whether external electronic device 1 210 supports a cooperative scan related to the second WLAN protocol, based on the capability of external electronic device 1 210. For example, the processor 500 may acquire the capability of external electronic device 1 210 from external electronic device 1 210 through NAN communication or out of band (OOB) communication between the electronic device 101 and external electronic device 1 210. For example, the OOB communication may be a communication scheme different from the NAN communication and may include at least one of Bluetooth, Bluetooth low energy (BLE), near field communication (NFC), quick response (QR), or a second WLAN protocol (e.g., Wi-Fi legacy, Wi-Fi direct (or Wi-Fi P2P), or mobile hotspot).

For example, the processor 500 may control the communication circuit 510 to transmit a cooperative scan-related identification request message to external electronic device 1 210. The processor 500 may identify whether external electronic device 1 210 supports a cooperative scan related to the second WLAN protocol, based on a cooperative scan-related response message. For example, the identification request message and/or the response message may be transmitted and/or received through NAN communication (e.g., SDF, NDP, or NAF) or OOB communication.

For example, the processor 500 may determine whether a cooperative scan related to the second WLAN protocol may be performed with external electronic device 1 210, based on at least one of information regarding the state of the channel with external electronic device 1 210 or the distance from external electronic device 1 210. For example, the channel state information may include at least one of received signal strength indication (RSSI), reference signal received quality (RSRQ), reference signal received power (RSRP), signal to noise ratio (SNR), signal to interference and noise ratio (SINR), quality of service (QoS), or bit error rate (BER). For example, the distance from external electronic device 1 210 may be estimated based on information regarding the state of the channel with external electronic device 1 210, or may be estimated through a location estimation sensor.

For example, in case that the information regarding the state of the channel with external electronic device 1 210 satisfies a designated reference channel condition, the processor 500 may determine that a cooperative scan related to the second WLAN protocol may be performed with external electronic device 1 210. For example, states in which the designated reference channel condition is satisfied may include states in which information regarding the state of the channel with external electronic device 1 210 exceeds a designated reference channel value.

For example, in case that the information regarding the state of the channel with external electronic device 1 210 does not satisfy a designated reference channel condition, the processor 500 may determine that a cooperative scan related to the second WLAN protocol may not be performed with external electronic device 1 210. For example, states in which the designated reference channel condition is not satisfied may include states in which information regarding the state of the channel with external electronic device 1 210 is equal to or less than a designated reference channel value.

For example, in case that the distance from external electronic device 1 210 satisfies a designated reference distance condition, the processor 500 may determine that a cooperative scan related to the second WLAN protocol may be performed with external electronic device 1 210. For example, states in which the designated reference distance condition is satisfied may include states in which the distance between electronic device 101 and external electronic device 1 210 is equal to or less than a designated reference distance.

For example, in case that the distance from external electronic device 1 210 does not satisfy a designated reference distance condition, the processor 500 may determine that a cooperative scan related to the second WLAN protocol may not be performed with external electronic device 1 210. For example, states in which the designated reference distance condition is not satisfied may include states in which the distance between electronic device 101 and external electronic device 1 210 exceeds a designated reference distance.

According to an embodiment, in case that the processor 500 determines that external electronic device 1 210 may perform a scan based on the second WLAN protocol in cooperation with the electronic device 101, the processor 500 may identify (or determine) a channel for a scan based on the second WLAN protocol in the electronic device 101 and external electronic device 1 210. For example, the processor 500 may identify (or determine) a channel for a scan based on the second WLAN protocol in the electronic device 101 and external electronic device 1 210 through negotiation with external electronic device 1 210. For example, the processor 500 may select at least some consecutive channels (e.g., a first group of channels), among channels in which a scan based on the second WLAN protocol will be performed (or is to be performed), as channels for performing a search in the electronic device 101. For example, the remaining channels (e.g., a second group of channels) other than at least some channels may be selected as channels for performing a search in external electronic device 1 210. For example, a channel for a scan based on the second WLAN protocol in the electronic device 101 and external electronic device 1 210 may be randomly selected. For example, a channel for a scan based on the second WLAN protocol in the electronic device 101 and external electronic device 1 210 may be selected with regard to each frequency band. For example, a channel for a scan based on the second WLAN protocol in the electronic device 101 and external electronic device 1 210 may be selected based on at least one of the load, the remaining battery level, or the capability (e.g., frequency support information) of the electronic device 101 and/or external electronic device 1 210.

According to an embodiment, the processor 500 may configure a time interval for a scan based on the second WLAN protocol. For example, the processor 500 may configure a time interval (or the size of the time interval) for a scan based on the second WLAN protocol, based on channel information (e.g., the number of channels of the first group) for performing a scan in the electronic device 101, channel information (e.g., the number of channels of the second group) for performing a scan in external electronic device 1 210, the type of services provided through the first WLAN protocol, or the type of services provided through the second WLAN protocol. For example, the configuration of the time interval for a scan based on the second WLAN protocol may include a series of operations for determining at least one of the size of a time interval for a scan based on the second WLAN protocol, the scan starting timepoint, the scan ending timepoint, the scan cycle, or the timepoint at which a scan result is acquired in the electronic device 101. For example, at least one of the scan starting timepoint, the scan ending timepoint, the scan cycle, or the timepoint at which a scan result is acquired may be configured based on (or with reference to) a discovery window.

According to an embodiment, the processor 500 may control the communication circuit 510 to transmit configuration information of a time interval for a scan based on the second WLAN protocol to external electronic device 1 210. For example, the configuration information of a time interval for a scan based on the second WLAN protocol may be transmitted through NAN communication (e.g., SDF, NDP, or NAF) or OOB communication. For example, the configuration information of a time interval for a scan based on the second WLAN protocol may include at least one of a channel (e.g., a channel of the second group) for external electronic device 1 210 to perform a scan, the size of a time interval for the scan, the scan starting timepoint, the scan ending timepoint, the scan cycle, or the timepoint at which a scan result is acquired in the electronic device 101.

According to an embodiment, the processor 500 may update scheduling for data communication with external electronic device 1 210, based on the first WLAN protocol, based on the configuration information of a time interval for a scan based on the second WLAN protocol. For example, the processor 500 may perform second scheduling for data communication with external electronic device 1 210, based on the first WLAN protocol, in the remaining interval other than the time interval for a scan based on the second WLAN protocol. For example, the remaining interval may include at least a part of the remaining interval other than a time interval for a scan based on the second WLAN protocol, among a time interval between discovery windows.

According to an embodiment, the processor 500 may control the communication circuit 510 to transmit scheduling update information (or second scheduling result) to external electronic device 1 210. For example, the scheduling update information (or second scheduling result) may be transmitted through NAN communication.

According to an embodiment, the processor 500 may control the communication circuit 510 to perform a scan related to the second WLAN protocol, based on the configuration information of a time interval for a scan based on the second WLAN protocol. For example, the processor 500 may control the communication circuit 510 to perform a scan regarding channels included in the first group during a time interval for a scan based on the second WLAN protocol. For example, the processor 500 may control the output device of the electronic device 101 to output a scan result related to the second WLAN protocol. For example, the output device of the electronic device 101 may include at least one of a display, a speaker, or a vibration module operatively connected to the electronic device 101.

According to an embodiment, in case that the processor 500 received a scan result related to the second WLAN protocol from external electronic device 1 210, the processor 500 may control the output device of the electronic device 101 to output the scan result related to the second WLAN protocol received from external electronic device 1 210. For example, the processor 500 may update the second WLAN protocol-related scan result currently output through the output device, based on the second WLAN protocol-related scan result received from external electronic device 1 210. For example, the second WLAN protocol-related scan result may be acquired from an external electronic device 1 210 through NAN communication (e.g., SDF, NDP, or NAF) or OOB communication.

According to an embodiment, the processor 500 may control the communication circuit 510 to perform data communication with external electronic device 1 210 related to the first WLAN protocol, based on scheduling update information (or second scheduling result). For example, the processor 500 may control the communication circuit 510 to perform data communication with external electronic device 1 210 through an NDP path configured based on the second scheduling.

According to an embodiment, the processor 500 may update scheduling for data communication with external electronic device 1 210, based on the first WLAN protocol, based on termination of a scan related to the second WLAN protocol. For example, the processor 500 may restore scheduling related to data communication with external electronic device 1 210, based on the first WLAN protocol, to scheduling (e.g., first scheduling) before performing a scan based on the second WLAN protocol.

According to an embodiment, the memory 520 may store various pieces of data used by at least one component (e.g., the processor 500 or the communication circuit 510) of the electronic device 101. For example, the memory 520 may store various instructions executable through the processor 500. For example, the instructions may be executed individually or collectively by the processor 500 (e.g., at least one processor).

According to an embodiment, after transmitting configuration information of a time interval for a scan based on the second WLAN protocol to external electronic device 1 210, the electronic device 101 may transmit scheduling update information (or second scheduling result).

According to an embodiment, the electronic device 101 may transmit scheduling update information (or second scheduling result) to external electronic device 1 210 and then transmit configuration information of a time interval for a scan based on the second WLAN protocol.

According to an embodiment, the electronic device 101 may substantially simultaneously transmit configuration information of a time interval for a scan based on the second WLAN protocol and scheduling update information (or second scheduling result) to external electronic device 1 210.

According to an embodiment, the electronic device 101 may merge a scan result related to the second WLAN protocol performed in the electronic device 101 and a scan result related to the second WLAN protocol acquired from external electronic device 1 210 and then output the merged result.

According to an embodiment, an electronic device (e.g., the electronic device 101 in FIG. 1, FIG. 2, FIG. 3, FIG. 4, FIG. 5, or FIG. 6) may include a communication circuit (e.g., the wireless communication module 192 in FIG. 1 or the communication circuit 510 in FIG. 5) configured to perform WLAN communication, at least one processor (e.g., the processor 120 in FIG. 1 or the processor 500 in FIG. 5) including a processing circuit, and a memory (e.g., the memory 130 in FIG. 1 or the memory 520 in FIG. 5) operatively connected to the at least one processor. According to an embodiment, the memory may store instructions that, when executed individually or collectively by the at least one processor, cause the electronic device to perform data communication based on neighbor awareness networking (NAN) based on first scheduling with a first external electronic device (e.g., external electronic device 1 210 in FIG. 2, FIG. 3, or FIG. 4). According to an embodiment, the memory may store instructions that, when executed individually or collectively by at least one processor, cause the electronic device to identify an event related to a scan regarding multiple channels of a heterogeneous WLAN protocol during data communication based on NAN with the first external electronic device. According to an embodiment, the memory may store instructions that, when executed individually or collectively by the at least one processor, cause the electronic device to identify, based on an event, a first group of channels among channels for a scan of the heterogeneous WLAN protocol, and a second group of channels for performing a scan in the first external electronic device, among the channels for a scan of the heterogeneous WLAN protocol. According to an embodiment, the memory may store instructions that, when executed individually or collectively by at least one processor, cause the electronic device to configure a time interval for a scan of the heterogeneous WLAN protocol, based on channels regarding the first group of channels. According to an embodiment, the memory may store instructions that, when executed individually or collectively by at least one processor, cause the electronic device to perform second scheduling for data communication based on NAN with the first external electronic device, based on the configuration of a time interval for a scan of the heterogeneous WLAN protocol. According to an embodiment, the memory may store instructions that, when executed individually or collectively by at least one processor, cause the electronic device to transmit information requesting a scan of the heterogeneous WLAN protocol regarding the second group of channels to the first external electronic device. According to an embodiment, the memory may store instructions that, when executed individually or collectively by at least one processor, cause the electronic device to perform a scan related to the first group of channels, based on the configuration of a time interval for a scan of the heterogeneous WLAN protocol. According to an embodiment, the memory may store instructions that, when executed individually or collectively by at least one processor, cause the electronic device to acquire, from the first external electronic device, a scan result related to the second group of channels. According to an embodiment, the memory may store instructions that, when executed individually or collectively by at least one processor, cause the electronic device to perform data communication based on NAN with the first external electronic device, based on the second scheduling.

According to an embodiment, the information requesting a scan of the heterogeneous WLAN protocol may include at least one of information related to a channel included in the second group, the size of a time interval for a scan, the scan starting timepoint, the scan ending timepoint, a scan cycle, or the timepoint at which a scan result is acquired in the electronic device.

According to an embodiment, the information requesting a scan of the heterogeneous WLAN protocol may be transmitted to the first external electronic device through NAN communication or out of band (OOB) communication.

According to an embodiment, the scan result related to the second group of channels may be acquired from the first external electronic device through NAN communication or out-of-band (OOB) communication.

According to an embodiment, the memory may store instructions that, when executed individually or collectively by the at least one processor, cause the electronic device to output at least one of a scan result related to the first group of channels or a scan result related to the second group of channels.

According to an embodiment, the memory may store instructions that, when executed individually or collectively by the at least one processor, cause the electronic device to configure the size of a time interval for a scan of the heterogeneous WLAN protocol, based on at least one of a service type based on NAN with the first external electronic device or a service type related to the heterogeneous WLAN protocol.

According to an embodiment, the memory may store instructions that, when executed individually or collectively by the at least one processor, cause the electronic device to configure at least one of the scan ending timepoint or the scan cycle, based on at least one of the size of a time interval for a scan of the heterogeneous WLAN protocol, channels included in the first group, or channels included in the second group.

According to an embodiment, the memory may store instructions that, when executed individually or collectively by the at least one processor, cause the electronic device to, in case that a scan of the heterogeneous WLAN protocol is ended, restore second scheduling for data communication based on NAN with the first external electronic device to first scheduling.

According to an embodiment, the heterogeneous WLAN protocol may include at least one of WLAN-based direct communication or Wi-Fi legacy.

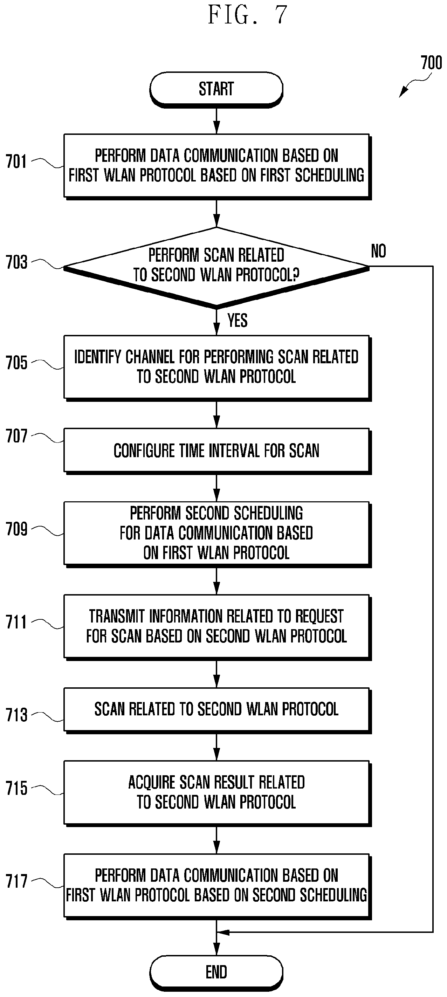

FIG. 7 is a flowchart 700 for performing data communication based on a first WLAN protocol and a search based on a second WLAN protocol in an electronic device according to an embodiment. In the following embodiment, respective operations may be performed sequentially, but are not necessarily performed sequentially. For example, the order of respective operations may be changed, and at least two operations may be performed in parallel. For example, the electronic device in FIG. 7 may be the electronic device 101 in FIG. 1, FIG. 2, FIG. 3, FIG. 4, FIG. 5, or FIG. 6.

Referring to FIG. 7, in an embodiment, the electronic device (e.g., the electronic device 101) or the processor (e.g., the processor 120 in FIG. 1 or the processor 500 in FIG. 5) may perform data communication with an external electronic device (e.g., external electronic device 1 210 in FIG. 2, FIG. 3, or FIG. 4) based on a first WLAN protocol in operation 701. For example, the processor 500 may acquire information related to the setup of a NAN data path (NDP) through first scheduling using a NAN action frame (NAF) transmitted and/or received in a discovery window with external electronic device 1 210 included in the same NAN cluster as the electronic device 101. The processor 500 may control the communication circuit 510 to configure a NAN data path (NDP) for data communication with external electronic device 1 210, based on information related to the setup of a NAN data path (NDP). For example, the NAN data path may denote a path for data communication between the electronic device 101 and external electronic device 1 210 included in the same NAN cluster in an interval between discovery windows. For example, the processor 500 may control the communication circuit 510 to perform at least one of data transmission or reception with external electronic device 1 210 through a NAN data path (NDP) (e.g., a time resource) configured between discovery windows. For example, the first WLAN protocol may include NAN communication.

According to an embodiment, the electronic device (e.g., the electronic device 101) or the processor (e.g., the processor 120 or 500) may determine whether to perform a scan (or search) based on the second WLAN protocol during data communication with an external electronic device (e.g., external electronic device 1 210) based on the first WLAN protocol in operation 703. For example, the processor 500 may identify whether an event related to a scan based on the second WLAN protocol occurs during data communication with external electronic device 1 210 based on the first WLAN protocol. For example, in case that an event related to a scan based on the second WLAN protocol occurs during data communication with external electronic device 1 210 based on the first WLAN protocol, the processor 500 may determine to perform a scan based on the second WLAN protocol. The processor 500 may determine to perform no scan based on the second WLAN protocol in case that no event related to a scan based on the second WLAN protocol has occurred during data communication with external electronic device 1 210 based on the first WLAN protocol. For example, an event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol.

According to an embodiment, in case of determining not to perform a scan based on the second WLAN protocol (e.g., "No" in operation 703), the electronic device (e.g., the electronic device 101) or the processor (e.g., the processor 120 or 500) may end an embodiment for performing data communication based on the first WLAN protocol and a search based on the second WLAN protocol. For example, the processor 500 may control the communication circuit 510 to perform at least one of data transmission or reception with external electronic device 1 210 through a NAN data path (NDP) (e.g., time resource and/or frequency resource) configured between discovery windows through first scheduling.

According to an embodiment, in case of determining to perform a scan based on the second WLAN protocol (e.g., "Yes" in operation 703), the electronic device (e.g., the electronic device 101) or the processor (e.g., the processor 120 or 500) may identify (or determine) a channel for a scan based on the second WLAN protocol in the electronic device (e.g., the electronic device 101) and the external electronic device (e.g., external electronic device 1 210) in operation 705. For example, the processor 500 may identify whether external electronic device 1 210 which is performing data communication based on the first WLAN protocol with the electronic device 101 supports a cooperative scan related to the second WLAN protocol. In case of determining that external electronic device 1 210 supports a cooperative scan related to the second WLAN protocol, the processor 500 may determine that a scan based on the second WLAN protocol may be performed in cooperation with the electronic device 101. For example, whether external electronic device 1 210 supports a collaborative scan may be identified before or after an event related to a scan based on the second WLAN protocol occurs. For example, the cooperative scan may be a scheme in which external electronic device 1 210 and the electronic device 101 perform a scan based on the second WLAN protocol together, and may include a series of operations in which the electronic device 101 performs a search regarding channels included in a first group among channels (or frequencies) for a scan based on the second WLAN protocol, and external electronic device 1 210 performs a search regarding channels included in a second group different from the first group.

For example, the processor 500 may determine whether a cooperative scan related to the second WLAN protocol may be performed with external electronic device 1 210, based on at least one of information regarding the state of the channel with external electronic device 1 210 or the distance from external electronic device 1 210. For example, in case that the information regarding the state of the channel with external electronic device 1 210 satisfies a designated reference channel condition, the processor 500 may determine that a cooperative scan related to the second WLAN protocol may be performed with external electronic device 1 210. For example, states in which the designated reference channel condition is satisfied may include states in which information regarding the state of the channel with external electronic device 1 210 exceeds a designated reference channel value. For example, in case that the distance from external electronic device 1 210 satisfies a designated reference distance condition, the processor 500 may determine that a cooperative scan related to the second WLAN protocol may be performed with external electronic device 1 210. For example, states in which the designated reference distance condition is satisfied may include states in which the distance from external electronic device 1 210 is equal to or less than a designated reference distance.

For example, in case of determining that external electronic device 1 210 may perform a scan based on the second WLAN protocol in cooperation with the electronic device 101, the processor 500 may identify (or determine) a channel for a scan based on the second WLAN protocol in the electronic device 101 and external electronic device 1 210. For example, the channel for a scan based on the second WLAN protocol in the electronic device 101 may include consecutive channels included in a first group among the channels for performing a scan based on the second WLAN protocol. For example, the channel for a scan based on the second WLAN protocol in external electronic device 1 210 may include consecutive channels included in a second group, which is different from the first group, among channels for performing a scan based on the second WLAN protocol. For example, the channels included in the first group may include at least some consecutive channels among channels for performing a scan based on the second WLAN protocol. For example, the channels included in the second group may include the remaining consecutive channels other than at least some channels for a scan based on the second WLAN protocol in the electronic device 101, among channels for performing a scan based on the second WLAN protocol. For example, a channel for a scan based on the second WLAN protocol in the electronic device 101 and external electronic device 1 210 may be randomly selected. For example, a channel for a scan based on the second WLAN protocol in the electronic device 101 and external electronic device 1 210 may be selected with regard to each frequency band. For example, a channel for a scan based on the second WLAN protocol in the electronic device 101 and external electronic device 1 210 may be selected based on at least one of the load, the remaining battery level, or the capability (e.g., frequency support information) of the electronic device 101 and/or external electronic device 1 210.

According to an embodiment, the electronic device (e.g., the electronic device 101) or the processor (e.g., the processor 120 or 500) may configure a time interval for a scan based on the second WLAN protocol, based on a channel for a scan based on the second WLAN protocol in the electronic device (e.g., the electronic device 101) and the external electronic device (e.g., external electronic device 1 210) in operation 707. For example, the processor 500 may configure a time interval (e.g., scan duration) (or the size of the time interval) for a scan based on the second WLAN protocol, based on at least one of channel information (e.g., the number of channels of the first group) for performing a scan in the electronic device 101, channel information (e.g., the number of channels of the second group) for performing a scan in external electronic device 1 210, the type of services provided through the first WLAN protocol, or the type of services provided through the second WLAN protocol. For example, in case that the number of channels (e.g., the number of channels of the first group) for performing a scan in the electronic device 101 and the number of channels (e.g., the number of channels of the second group) for performing a scan in external electronic device 1 210 are different, the processor 500 may configure a time interval for the scan based on the second WLAN protocol, based on the relatively large number of channels. For example, the configuration of a time interval for a scan based on the second WLAN protocol may include a series of operations for determining at least one of the size of a time interval for a scan based on the second WLAN protocol, the scan starting timepoint, the scan ending timepoint, the scan cycle, or the timepoint at which a scan result is acquired in the electronic device 101. For example, at least one of the scan starting timepoint, the scan ending timepoint, the scan cycle, or the timepoint at which a scan result is acquired may be configured based on (or with reference to) a discovery window.

According to an embodiment, the electronic device (e.g., the electronic device 101) or the processor (e.g., the processor 120 or 500) may perform second scheduling for data communication with an external electronic device (e.g., external electronic device 1 210) based on the first WLAN protocol, based on the configuration information for a time interval for a scan based on the second WLAN protocol in operation 709. For example, the processor 500 may update scheduling for data communication with external electronic device 1 210 based on the first WLAN protocol to second scheduling in the remaining interval other than a time interval for a scan based on the second WLAN protocol. For example, the remaining interval may include a remaining interval other than a time interval for a scan based on the second WLAN protocol among a time interval between discovery windows.

According to an embodiment, the electronic device (e.g., the electronic device 101) or the processor (e.g., the processor 120 or 500) may transmit information (or a message) related to a request for a scan based on the second WLAN protocol to external electronic device 1 210 in operation 711. For example, information (or a message) related to a request for a scan based on the second WLAN protocol may be transmitted through NAN communication (e.g., SDF, NDP, or NAF) or OOB communication. For example, the information (or message) related to a request for a scan based on the second WLAN protocol may include configuration information of a time interval for a scan based on the second WLAN protocol. For example, the configuration information of a time interval for the scan based on the second WLAN protocol may include at least one of a channel (e.g., a channel of the second group) for external electronic device 1 210 to perform a scan, the size of the time interval, the scan starting timepoint, the scan ending timepoint, the scan cycle, or the timepoint at which a scan result is acquired in the electronic device 101.

According to an embodiment, the electronic device (e.g., the electronic device 101) or the processor (e.g., the processor 120 or 500) may perform a scan related to the second WLAN protocol, based on the configuration information of a time interval for a scan based on the second WLAN protocol, in operation 713. For example, the processor 500 may control the communication circuit 510 to perform a scan regarding channels included in the first group during a time interval for a scan based on the second WLAN protocol. For example, the processor 500 may control the output device of the electronic device 101 to output a scan result related to the second WLAN protocol. For example, the output device of the electronic device 101 may include at least one of a display, a speaker, or a vibration module operatively connected to the electronic device 101.

According to an embodiment, the electronic device (e.g., the electronic device 101) or the processor (e.g., the processor 120 or 500) may acquire a scan result related to the second WLAN protocol from the external electronic device (e.g., external electronic device 1 210) in operation 715. For example, the scan result related to the second WLAN protocol acquired from the external electronic device may include a scan result related to channels included in the second group. For example, the scan result related to the second WLAN protocol may be acquired from external electronic device 1 210 through NAN communication (e.g., SDF, NDP, or NAF) or OOB communication.

For example, the processor 500 may update the second WLAN protocol-related scan result that is currently output through the output device, based on the second WLAN protocol-related scan result received from external electronic device 1 210. For example, the scan result update may include a series of operations of additionally outputting, through the output device, a scan result different from the scan result related to the second WLAN protocol output through the output device, in the scan result related to the second WLAN protocol received from external electronic device 1 210.

According to an embodiment, the electronic device (e.g., the electronic device 101) or the processor (e.g., the processor 120 or 500) may perform data communication with the external electronic device (e.g., external electronic device 1 210) related to the first WLAN protocol, based on the second scheduling result related to the first WLAN protocol, in operation 717. For example, the processor 500 may control the communication circuit 510 to perform data communication with the external electronic device (e.g., external electronic device 1 210) related to the first WLAN protocol, based on the second scheduling result, in case that the periodic second WLAN protocol-related scan has not been terminated (or completed).

According to an embodiment, the electronic device (e.g., the electronic device 101) or the processor (e.g., the processor 120 or 500) may merge the scan result related to the second WLAN protocol performed by the electronic device 101 and the scan result related to the second WLAN protocol received from external electronic device 1 210, and may output the merged result through the output device of the electronic device 101. For example, in case of acquiring a scan result related to the second WLAN protocol from external electronic device 1 210, through operation 715 in FIG. 7, the electronic device 101 may merge the scan result related to the second WLAN protocol performed by the electronic device 101 and the scan result related to the second WLAN protocol received from external electronic device 1 210, and may output the merged scan result.

According to an embodiment, the electronic device 101 may transmit configuration information of a time interval for a scan based on the second WLAN protocol to external electronic device 1 210, and may then transmit scheduling update information (or second scheduling result). For example, the configuration information of a time interval for a scan based on the second WLAN protocol may be transmitted through NAN communication (e.g., SDF, NDP, or NAF) or out of band (OOB) communication. For example, the scheduling update information (or second scheduling result) may be transmitted through the NAN communication.

According to an embodiment, after transmitting scheduling update information (or second scheduling result) to external electronic device 1 210, the electronic device 101 may transmit configuration information of a time interval for a scan based on the second WLAN protocol.

According to an embodiment, the electronic device 101 may substantially simultaneously transmit configuration information of a time interval for a scan based on the second WLAN protocol and scheduling update information (or second scheduling result) to external electronic device 1 210.

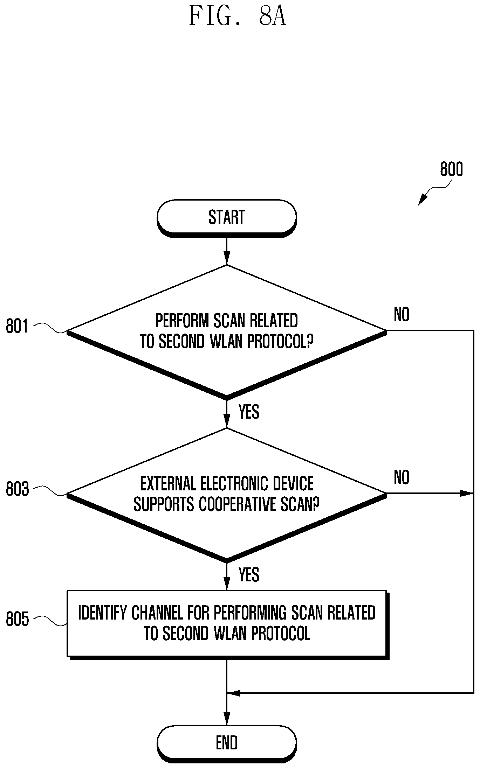

FIG. 8A is a flowchart 800 for identifying a channel for performing a search based on a second WLAN protocol in an electronic device according to an embodiment. For example, at least a part of FIG. 8A may include detailed operations of operations 703 to 705 in FIG. 7. In the following embodiment, respective operations may be performed in sequence, but are not necessarily performed in sequence. For example, the order of respective operations may be changed, and at least two operations may be performed in parallel. For example, the electronic device in FIG. 8A may be the electronic device 101 in FIG. 1, FIG. 2, FIG. 3, FIG. 4, FIG. 5, or FIG. 6.

Referring to FIG. 8A, according to an embodiment, in case of performing data communication with an external electronic device (e.g., external electronic device 1 210 in FIG. 2, FIG. 3, or FIG. 4) based on a first WLAN protocol (e.g., operation 701 in FIG. 7), the electronic device (e.g., the electronic device 101) or the processor (e.g., the processor 120 in FIG. 1 or the processor 500 in FIG. 5) may determine whether to perform a scan (or search) based on a second WLAN protocol during data communication with the external electronic device (e.g., external electronic device 1 210) based on the first WLAN protocol, in operation 801. For example, in case that an event related to a scan based on the second WLAN protocol occurred during data communication with external electronic device 1 210 based on the first WLAN protocol, the processor 500 may determine to perform a scan based on the second WLAN protocol. In case that no event related to a scan based on the second WLAN protocol occurred during data communication with external electronic device 1 210 based on the first WLAN protocol, the processor 500 may determine not to perform a scan based on the second WLAN protocol. For example, the event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol.

According to an embodiment, in case of determining to perform a scan based on the second WLAN protocol (e.g., "Yes" in operation 801), the electronic device (e.g., the electronic device 101) or the processor (e.g., the processor 120 or 500) may identify whether the external electronic device (e.g., external electronic device 1 210) supports a cooperative scan related to the second WLAN protocol, in operation 803. For example, the cooperative scan may be a scheme in which external electronic device 1 210 and the electronic device 101 perform a scan based on the second WLAN protocol together, and may include a series of operations in which the electronic device 101 performs a search regarding channels included in a first group among channels (or frequencies) for a scan based on the second WLAN protocol, and external electronic device 1 210 performs a search regarding channels included in a second group different from the first group. For example, channels included in the first group may include at least some consecutive channels among channels for performing a scan based on the second WLAN protocol. For example, channels included in the second group may include remaining consecutive channels other than at least some channels for a scan based on the second WLAN protocol in the electronic device 101, among channels for performing a scan based on the second WLAN protocol.

For example, the processor 500 may identify whether external electronic device 1 210 supports a cooperative scan related to the second WLAN protocol, based on the capability of external electronic device 1 210. For example, the capability of external electronic device 1 210 may be acquired through NAN communication or OOB communication. For example, the OOB communication may be a communication scheme different from the NAN communication, and may include at least one of Bluetooth, Bluetooth low energy (BLE), near field communication (NFC), quick response (QR), or a second WLAN protocol (e.g., Wi-Fi legacy, Wi-Fi direct (or Wi-Fi P2P), or mobile hotspot).

For example, the processor 500 may control the communication circuit 510 to transmit an identification request message related to a cooperative scan to external electronic device 1 210. The processor 500 may identify whether external electronic device 1 210 supports a cooperative scan related to the second WLAN protocol, based on a response message related to a cooperative scan. For example, the identification request message and/or the response message may be transmitted and/or received through NAN communication (e.g., SDF, NDP, or NAF) or OOB communication.

According to an embodiment, in case of determining not to perform a scan based on the second WLAN protocol (e.g., "No" in operation 801), or in case that the external electronic device (e.g., external electronic device 1 210) does not support a cooperative scan related to the second WLAN protocol (e.g., "No" in operation 803), the electronic device (e.g., the electronic device 101) or the processor (e.g., the processor 120 or 500) may end an embodiment for identifying a channel for performing a search based on the second WLAN protocol. For example, in case of determining not to perform a scan based on the second WLAN protocol, the processor 500 may control the communication circuit 510 to perform at least one of data transmission or reception with external electronic device 1 210 through a NAN data path (NDP) configured between discovery windows. For example, in case that external electronic device 1 210 does not support a cooperative scan related to the second WLAN protocol, the processor 500 may control the communication circuit 510 to perform a scan based on the second WLAN protocol in the electronic device 101.

According to an embodiment, in case that the external electronic device (e.g., external electronic device 1 210) supports a cooperative scan related to the second WLAN protocol (e.g., "Yes" in operation 803), the electronic device (e.g., electronic device 101) or the processor (e.g., processor 120 or 500) may identify (or determine) a channel for a cooperative scan based on the second WLAN protocol in the electronic device (e.g., electronic device 101) and the external electronic device (e.g., external electronic device 1 210) in operation 805. For example, the processor 500 may confirm (or determine) that consecutive channels included in the first group, among channels (e.g., all channels) for performing a scan based on the second WLAN protocol, are channels for performing a scan in the electronic device 101. For example, the first group of channels may include multiple consecutive channels for performing a scan in the electronic device 101.

For example, the processor 500 may confirm (or determine) that consecutive channels included in the second group, among channels (e.g., all channels) for performing a scan based on the second WLAN protocol, are channels for performing a scan in external electronic device 1 210. For example, the second group of channels may include the remaining consecutive channels other than channels (e.g., the first group of channels) for performing a scan in the electronic device 101, among channels (e.g., all channels) for performing a scan based on the second WLAN protocol.

For example, a channel for a scan based on the second WLAN protocol in the electronic device 101 and external electronic device 1 210 may be randomly selected.

For example, a channel for a scan based on the second WLAN protocol in the electronic device 101 and external electronic device 1 210 may be selected with regard to each frequency band.

For example, a channel for a scan based on the second WLAN protocol in the electronic device 101 and external electronic device 1 210 may be selected based on at least one of the load, the remaining battery level, or the capability (e.g., frequency support information) of the electronic device 101 and/or external electronic device 1 210. For example, in case that the electronic device 101 supports an approximate 2.4GHz band, an approximate 5GHz band, and an approximate 6GHz band, and external electronic device 1 210 supports an approximate 2.4GHz band and an approximate 5GHz band, the processor 500 may confirm (or determine) that at least some of consecutive channels included in the approximate 2.4GHz band and the approximate 5GHz band other than the approximate 6GHz band, among channels (e.g., all channels) for performing a scan based on the second WLAN protocol, are channels for performing a scan in external electronic device 1 210. The processor 500 may confirm (or determine) that the remaining consecutive channels other than channels for performing a scan in external electronic device 1 210 are channels for performing a scan in the electronic device 101.

According to an embodiment, in case that external electronic device 1 210 does not support a cooperative scan related to the second WLAN protocol, the electronic device 101 may determine that the electronic device 101 performs a scan based on the second WLAN protocol. The electronic device 101 may configure a time interval for a scan based on the second WLAN protocol. For example, the electronic device 101 may configure a time interval (e.g., scan duration) (or the size of the time interval) for a scan based on the second WLAN protocol, based on the type of services provided through the first WLAN protocol or the type of services provided through the second WLAN protocol. The electronic device 101 may perform a scan based on the second WLAN protocol, based on a time interval for a scan based on the second WLAN protocol.

For example, the electronic device 101 may update scheduling for data communication with external electronic device 1 210, based on the first WLAN protocol, based on a time interval for a scan based on the second WLAN protocol. The electronic device 101 may perform data communication with external electronic device 1 210 related to the first WLAN protocol, based on the updated scheduling.

According to an embodiment, in case of performing a scan related to the second WLAN protocol in cooperation with external electronic device 1 210, the electronic device 101 may have a shorter time required for the scan than the case in which a scan related to the second WLAN protocol is performed only in the electronic device 101. The electronic device 101 may have a relatively short time necessary to perform a scan related to the second WLAN protocol as the number of external electronic devices performing a scan related to the second WLAN protocol increases. The relatively short time needed by the electronic device 101 for a scan related to the second WLAN protocol reduces the time for which data communication based on the first WLAN protocol is at least partially limited by the scan related to the second WLAN protocol, thereby increasing the efficiency of data communication based on the first WLAN protocol.

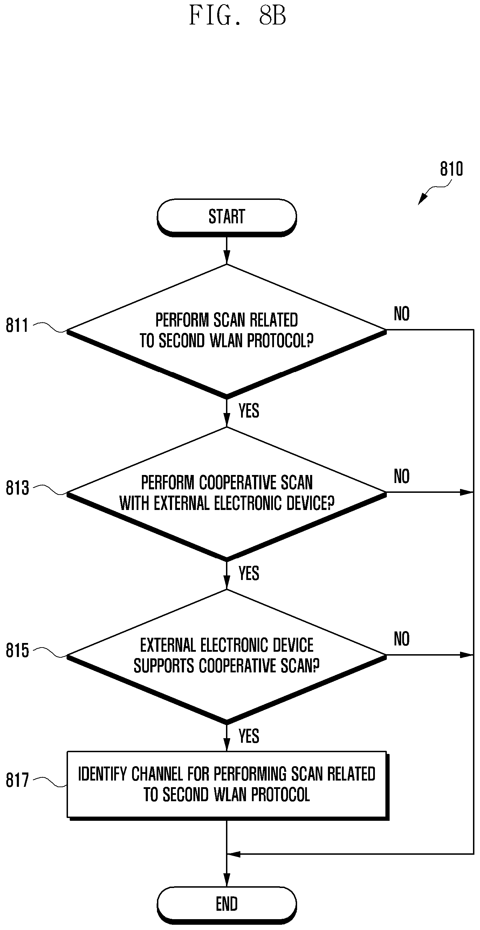

FIG. 8B is a flowchart 810 for identifying a channel for performing a search based on a second WLAN protocol in an electronic device according to an embodiment. For example, at least a part of FIG. 8B may include detailed operations of operations 703 to 705 in FIG. 7. In the following embodiment, respective operations may be performed in sequence, but are not necessarily performed in sequence. For example, the order of respective operations may be changed, and at least two operations may be performed in parallel. For example, the electronic device in FIG. 8B may be the electronic device 101 in FIG. 1, FIG. 2, FIG. 3, FIG. 4, FIG. 5, or FIG. 6.

Referring to FIG. 8B, according to an embodiment, in case of performing data communication with an external electronic device (e.g., external electronic device 1 210 in FIG. 2, FIG. 3, or FIG. 4) based on a first WLAN protocol (e.g., operation 701 in FIG. 7), the electronic device (e.g., the electronic device 101) or the processor (e.g., the processor 120 in FIG. 1 or the processor 500 in FIG. 5) may determine whether to perform a scan (or search) based on a second WLAN protocol during data communication with the external electronic device (e.g., external electronic device 1 210) based on the first WLAN protocol, in operation 811. For example, in case that an event related to a scan based on the second WLAN protocol occurred during data communication with external electronic device 1 210 based on the first WLAN protocol, the processor 500 may determine to perform a scan based on the second WLAN protocol. In case that no event related to a scan based on the second WLAN protocol occurred during data communication with external electronic device 1 210 based on the first WLAN protocol, the processor 500 may determine not to perform a scan based on the second WLAN protocol. For example, the event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol.

According to an embodiment, in case of determining to perform a scan based on the second WLAN protocol (e.g., "Yes" in operation 811), the electronic device (e.g., the electronic device 101) or the processor (e.g., the processor 120 or 500) may determine whether to perform a scan related to the second WLAN protocol in cooperation with the external electronic device (e.g., external electronic device 1 210) in operation 813. For example, the processor 500 may determine whether to perform a cooperative scan related to the second WLAN protocol in cooperation with external electronic device 1 210, based on at least one of information regarding the state of the channel with external electronic device 1 210 or the distance from external electronic device 1 210. For example, the channel state information may include at least one of received signal strength indication (RSSI), reference signal received quality (RSRQ), reference signal received power (RSRP), signal to noise ratio (SNR), signal to interference and noise ratio (SINR), quality of service (QoS), or bit error rate (BER). For example, the distance from external electronic device 1 210 may be estimated based on information regarding the state of the channel with external electronic device 1 210, or may be estimated through a location estimation sensor.

For example, in case that the information regarding the state of the channel with external electronic device 1 210 satisfies a designated reference channel condition, the processor 500 may determine whether to perform a scan related to the second WLAN protocol in cooperation with external electronic device 1 210. For example, states in which the designated reference channel condition is satisfied may include states in which information regarding the state of the channel with external electronic device 1 210 exceeds a designated reference channel value.

For example, in case that the information regarding the state of the channel with external electronic device 1 210 does not satisfy a designated reference channel condition, the processor 500 may determine whether not to perform a scan related to the second WLAN protocol in cooperation with external electronic device 1 210. For example, states in which the designated reference channel condition is not satisfied may include states in which information regarding the state of the channel with external electronic device 1 210 is equal to or less than a designated reference channel value.

For example, in case that the distance from external electronic device 1 210 satisfies a designated reference distance condition, the processor 500 may determine whether to perform a scan related to the second WLAN protocol in cooperation with external electronic device 1 210. For example, states in which the designated reference distance condition is satisfied may include states in which the distance between electronic device 101 and external electronic device 1 210 is equal to or less than a designated reference distance.

For example, in case that the distance from external electronic device 1 210 does not satisfy a designated reference distance condition, the processor 500 may determine whether not to perform a scan related to the second WLAN protocol in cooperation with external electronic device 1 210. For example, states in which the designated reference distance condition is not satisfied may include states in which the distance between electronic device 101 and external electronic device 1 210 exceeds a designated reference distance.

According to an embodiment, in case of determining to perform a scan related to the second WLAN protocol in cooperation with the external electronic device (e.g., "Yes" in operation 813), the electronic device (e.g., the electronic device 101) or the processor (e.g., the processor 120 or 500) may identify whether the external electronic device (e.g., external electronic device 1 210) supports a cooperative scan related to the second WLAN protocol, in operation 815. For example, the processor 500 may identify whether external electronic device 1 210 supports a cooperative scan related to the second WLAN protocol, based on the capability of external electronic device 1 210. For example, the capability of external electronic device 1 210 may be acquired through NAN communication or OOB communication. For example, the OOB communication may be a communication scheme different from the NAN communication, and may include at least one of Bluetooth, Bluetooth low energy (BLE), near field communication (NFC), quick response (QR), or a second WLAN protocol (e.g., Wi-Fi legacy, Wi-Fi direct (or Wi-Fi P2P), or mobile hotspot).

For example, the processor 500 may control the communication circuit 510 to transmit an identification request message related to a cooperative scan to external electronic device 1 210. The processor 500 may identify whether external electronic device 1 210 supports a cooperative scan related to the second WLAN protocol, based on a response message related to a cooperative scan. For example, the identification request message and/or the response message may be transmitted and/or received through NAN communication (e.g., SDF, NDP, or NAF) or OOB communication.

According to an embodiment, in case of determining not to perform a scan based on the second WLAN protocol (e.g., "No" in operation 811), in case of determining not to perform a scan based on the second WLAN protocol in cooperation with the external electronic device (e.g., "No" in operation 813), or in case that the external electronic device (e.g., external electronic device 1 210) does not support a cooperative scan related to the second WLAN protocol (e.g., "No" in operation 815), the electronic device (e.g., the electronic device 101) or the processor (e.g., the processor 120 or 500) may end an embodiment for identifying a channel for performing a search based on the second WLAN protocol. For example, in case of determining not to perform a scan based on the second WLAN protocol, the processor 500 may control the communication circuit 510 to perform at least one of data transmission or reception with external electronic device 1 210 through a NAN data path (NDP) configured between discovery windows. For example, in case that external electronic device 1 210 does not support a cooperative scan related to the second WLAN protocol, the processor 500 may control the communication circuit 510 to perform a scan based on the second WLAN protocol in the electronic device 101.

According to an embodiment, in case that the external electronic device (e.g., external electronic device 1 210) supports a cooperative scan related to the second WLAN protocol (e.g., "Yes" in operation 815), the electronic device (e.g., electronic device 101) or the processor (e.g., processor 120 or 500) may identify (or determine) a channel for a cooperative scan based on the second WLAN protocol in the electronic device (e.g., electronic device 101) and the external electronic device (e.g., external electronic device 1 210) in operation 817. For example, the processor 500 may confirm (or determine) that consecutive channels included in the first group, among channels (e.g., all channels) for performing a scan based on the second WLAN protocol, are channels for performing a scan in the electronic device 101. For example, the first group of channels may include multiple consecutive channels for performing a scan in the electronic device 101.

For example, the processor 500 may confirm (or determine) that consecutive channels included in the second group, among channels (e.g., all channels) for performing a scan based on the second WLAN protocol, are channels for performing a scan in external electronic device 1 210. For example, the second group of channels may include the remaining consecutive channels other than channels (e.g., the first group of channels) for performing a scan in the electronic device 101, among channels (e.g., all channels) for performing a scan based on the second WLAN protocol.

For example, a channel for a scan based on the second WLAN protocol in the electronic device 101 and external electronic device 1 210 may be randomly selected.

For example, a channel for a scan based on the second WLAN protocol in the electronic device 101 and external electronic device 1 210 may be selected with regard to each frequency band.

For example, a channel for a scan based on the second WLAN protocol in the electronic device 101 and external electronic device 1 210 may be selected based on at least one of the load, the remaining battery level, or the capability (e.g., frequency support information) of the electronic device 101 and/or external electronic device 1 210.

According to an embodiment, in case that the electronic device 101 determines not to perform a scan based on the second WLAN protocol in cooperation with external electronic device 1 210, or in case that external electronic device 1 210 does not support a cooperative scan related to the second WLAN protocol, the electronic device 101 may determine to perform a scan based on the second WLAN protocol in the electronic device 101. The electronic device 101 may configure a time interval for a scan based on the second WLAN protocol. For example, the electronic device 101 may configure a time interval (e.g., scan duration) (or the size of the time interval) for a scan based on the second WLAN protocol, based on the type of services provided through the first WLAN protocol or the type of services provided through the second WLAN protocol. The electronic device 101 may perform a scan based on the second WLAN protocol, based on the time interval for a scan based on the second WLAN protocol.

For example, the electronic device 101 may update scheduling for data communication with external electronic device 1 210 based on the first WLAN protocol, based on a time interval for a scan based on the second WLAN protocol. The electronic device 101 may perform data communication with external electronic device 1 210 related to the first WLAN protocol, based on the updated scheduling.

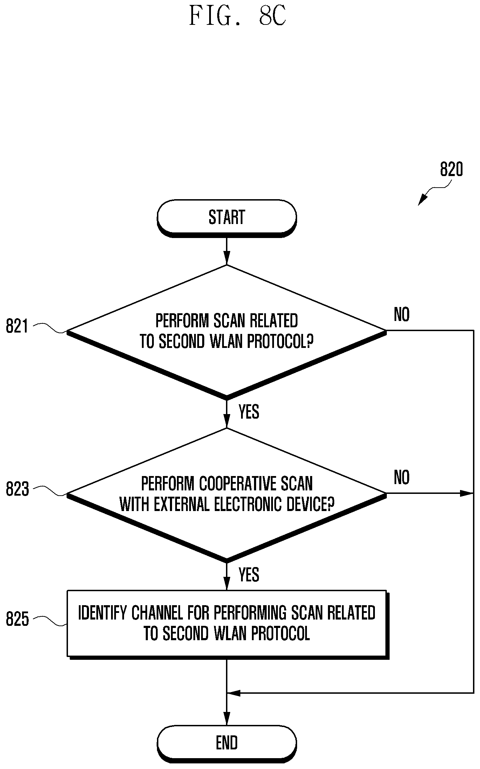

FIG. 8C is a flowchart 820 for identifying a channel for performing a search based on a second WLAN protocol in an electronic device according to an embodiment. For example, at least a part of FIG. 8C may include detailed operations of operations 703 to 705 in FIG. 7. In the following embodiment, respective operations may be performed in sequence, but are not necessarily performed in sequence. For example, the order of respective operations may be changed, and at least two operations may be performed in parallel. For example, the electronic device in FIG. 8C may be the electronic device 101 in FIG. 1, FIG. 2, FIG. 3, FIG. 4, FIG. 5, or FIG. 6.

Referring to FIG. 8C, according to an embodiment, in case of performing data communication with an external electronic device (e.g., external electronic device 1 210 in FIG. 2, FIG. 3, or FIG. 4) based on a first WLAN protocol (e.g., operation 701 in FIG. 7), the electronic device (e.g., the electronic device 101) or the processor (e.g., the processor 120 in FIG. 1 or the processor 500 in FIG. 5) may determine whether to perform a scan (or search) based on a second WLAN protocol during data communication with the external electronic device (e.g., external electronic device 1 210) based on the first WLAN protocol, in operation 821. For example, in case that an event related to a scan based on the second WLAN protocol occurred during data communication with external electronic device 1 210 based on the first WLAN protocol, the processor 500 may determine to perform a scan based on the second WLAN protocol. In case that no event related to a scan based on the second WLAN protocol occurred during data communication with external electronic device 1 210 based on the first WLAN protocol, the processor 500 may determine not to perform a scan based on the second WLAN protocol. For example, the event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol.

According to an embodiment, in case of determining to perform a scan based on the second WLAN protocol (e.g., "Yes" in operation 821), the electronic device (e.g., the electronic device 101) or the processor (e.g., the processor 120 or 500) may determine whether to perform a scan related to the second WLAN protocol in cooperation with the external electronic device (e.g., external electronic device 1 210) in operation 823. For example, the processor 500 may determine whether to perform a scan related to the second WLAN protocol in cooperation with external electronic device 1 210, based on at least one of information regarding the state of the channel with external electronic device 1 210 or the distance from external electronic device 1 210. For example, the channel state information may include at least one of received signal strength indication (RSSI), reference signal received quality (RSRQ), reference signal received power (RSRP), signal to noise ratio (SNR), signal to interference and noise ratio (SINR), quality of service (QoS), or bit error rate (BER). For example, the distance from external electronic device 1 210 may be estimated based on information regarding the state of the channel with external electronic device 1 210, or may be estimated through a location estimation sensor.

For example, in case that the information regarding the state of the channel with external electronic device 1 210 satisfies a designated reference channel condition, the processor 500 may determine whether to perform a scan related to the second WLAN protocol in cooperation with external electronic device 1 210. For example, states in which the designated reference channel condition is satisfied may include states in which information regarding the state of the channel with external electronic device 1 210 exceeds a designated reference channel value.

For example, in case that the information regarding the state of the channel with external electronic device 1 210 does not satisfy a designated reference channel condition, the processor 500 may determine whether not to perform a scan related to the second WLAN protocol in cooperation with external electronic device 1 210. For example, states in which the designated reference channel condition is not satisfied may include states in which information regarding the state of the channel with external electronic device 1 210 is equal to or less than a designated reference channel value.

For example, in case that the distance from external electronic device 1 210 satisfies a designated reference distance condition, the processor 500 may determine whether to perform a scan related to the second WLAN protocol in cooperation with external electronic device 1 210. For example, states in which the designated reference distance condition is satisfied may include states in which the distance between electronic device 101 and external electronic device 1 210 is equal to or less than a designated reference distance.

For example, in case that the distance from external electronic device 1 210 does not satisfy a designated reference distance condition, the processor 500 may determine whether not to perform a scan related to the second WLAN protocol in cooperation with external electronic device 1 210. For example, states in which the designated reference distance condition is not satisfied may include states in which the distance between electronic device 101 and external electronic device 1 210 exceeds a designated reference distance.

According to an embodiment, in case of determining not to perform a scan based on the second WLAN protocol (e.g., "No" in operation 821), or in case of determining not to perform a scan based on the second WLAN protocol in cooperation with the external electronic device (e.g., "No" in operation 823), the electronic device (e.g., the electronic device 101) or the processor (e.g., the processor 120 or 500) may end an embodiment for identifying a channel for performing a search based on the second WLAN protocol. For example, in case of determining not to perform a scan based on the second WLAN protocol, the processor 500 may control the communication circuit 510 to perform at least one of data transmission or reception with external electronic device 1 210 through a NAN data path (NDP) configured between discovery windows. For example, in case that external electronic device 1 210 does not support a cooperative scan related to the second WLAN protocol, the processor 500 may control the communication circuit 510 to perform a scan based on the second WLAN protocol in the electronic device 101.

According to an embodiment, in case of determining to perform a scan based on the second WLAN protocol in cooperation with the external electronic device (e.g., "Yes" in operation 823), the electronic device (e.g., the electronic device 101) or the processor (e.g., the processor 120 or 500) may identify (or determine) a channel for a cooperative scan based on the second WLAN protocol in the electronic device (e.g., electronic device 101) and the external electronic device (e.g., external electronic device 1 210) in operation 825. For example, the processor 500 may confirm (or determine) that consecutive channels included in the first group, among channels (e.g., all channels) for performing a scan based on the second WLAN protocol, are channels for performing a scan in the electronic device 101. For example, the first group of channels may include multiple consecutive channels for performing a scan in the electronic device 101.

For example, the processor 500 may confirm (or determine) that consecutive channels included in the second group, among channels (e.g., all channels) for performing a scan based on the second WLAN protocol, are channels for performing a scan in external electronic device 1 210. For example, the second group of channels may include the remaining consecutive channels other than channels (e.g., the first group of channels) for performing a scan in the electronic device 101, among channels (e.g., all channels) for performing a scan based on the second WLAN protocol.

For example, a channel for a scan based on the second WLAN protocol in the electronic device 101 and external electronic device 1 210 may be randomly selected.

For example, a channel for a scan based on the second WLAN protocol in the electronic device 101 and external electronic device 1 210 may be selected with regard to each frequency band.

For example, a channel for a scan based on the second WLAN protocol in the electronic device 101 and external electronic device 1 210 may be selected based on at least one of the load, the remaining battery level, or the capability (e.g., frequency support information) of the electronic device 101 and/or external electronic device 1 210.

According to an embodiment, in case of determining not to perform a scan based on the second WLAN protocol in cooperation with external electronic device 1 210, the electronic device 101 may determine that the electronic device 101 performs a scan based on the second WLAN protocol. The electronic device 101 may configure a time interval for a scan based on the second WLAN protocol. For example, the electronic device 101 may configure a time interval (e.g., scan duration) (or the size of the time interval) for a scan based on the second WLAN protocol, based on the type of services provided through the first WLAN protocol or the type of services provided through the second WLAN protocol. The electronic device 101 may perform a scan based on the second WLAN protocol, based on a time interval for a scan based on the second WLAN protocol.

For example, the electronic device 101 may update scheduling for data communication with external electronic device 1 210, based on the first WLAN protocol, based on a time interval for a scan based on the second WLAN protocol. The electronic device 101 may perform data communication with external electronic device 1 210 related to the first WLAN protocol, based on the updated scheduling.

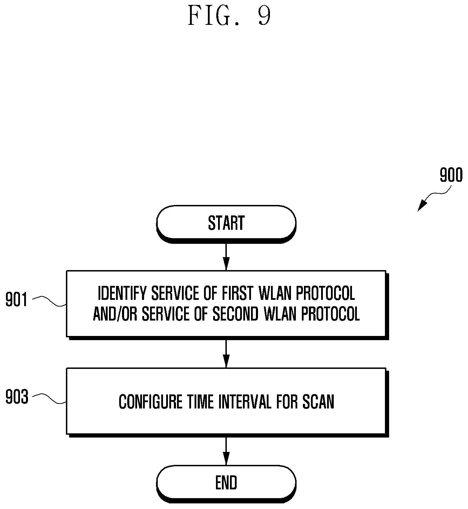

FIG. 9 is a flowchart 900 illustrating a process for performing scheduling based on a second WLAN protocol in an electronic device according to an embodiment. For example, at least a part of FIG. 9 may include detailed operations of operation 707 in FIG. 7. In the following embodiment, respective operations may be performed in sequence, but are not necessarily performed in sequence. For example, the order of respective operations may be changed, and at least two operations may be performed in parallel. For example, the electronic device in FIG. 9 may be the electronic device 101 in FIG. 1, FIG. 2, FIG. 3, FIG. 4, FIG. 5, or FIG. 6.

Referring to FIG. 9, according to an embodiment, in case of identifying a channel for a cooperative scan (e.g., operation 705 in FIG. 7, operation 805 in FIG. 8A, operation 817 in FIG. 8B, or operation 825 in FIG. 8C), the electronic device (e.g., the electronic device 101) or the processor (e.g., the processor 120 in FIG. 1 or the processor 500 in FIG. 5) may identify at least one of the type of services provided through a first WLAN protocol or the type of services provided through a second WLAN protocol, in operation 901.

According to an embodiment, the electronic device (e.g., the electronic device 101) or the processor (e.g., the processor 120 or 500) may configure a time interval for a scan based on the second WLAN protocol, based on at least one of channel information (e.g., the number of channels of the first group) for performing a scan in the electronic device 101, channel information (e.g., the number of channels of the second group) for performing a scan in external electronic device 1 210, the type of services provided through the first WLAN protocol, or the type of services provided through the second WLAN protocol, in operation 903. For example, in case of determining that the quality of service (QoS) of data communication with external electronic device 1 210 is important, based on the type of services provided through the first WLAN protocol, the processor 500 may determine that a relatively large amount of time resources is required for data communication with external electronic device 1 210, based on the first WLAN protocol. The processor 500 may configure a relatively small size of a time interval for a scan based on the second WLAN protocol such that a relatively large amount of time resources is allocated for data communication with external electronic device 1 210 based on the first WLAN protocol. For example, in case of determining that the scan speed of the second WLAN protocol is important, based on the type of services provided through the second WLAN protocol, the processor 500 may configure a relatively large size of a time interval for a scan based on the second WLAN protocol, for the sake of a relatively fast scan. For example, based on at least one of the size of a time interval for a scan based on the second WLAN protocol, channel information (e.g., the number of channels) for performing a scan in the electronic device 101, or channel information (e.g., the number of channels) for performing a scan in external electronic device 1 210, the processor 500 may determine at least one of the scan starting timepoint related to a scan based on the second WLAN protocol, the scan ending timepoint, the scan cycle, or the timepoint at which a scan result is acquired in the electronic device 101. For example, at least one of the scan starting timepoint, the scan ending timepoint, the scan cycle, or the timepoint at which a scan result is acquired may be configured based on (or with reference to) a discovery window.

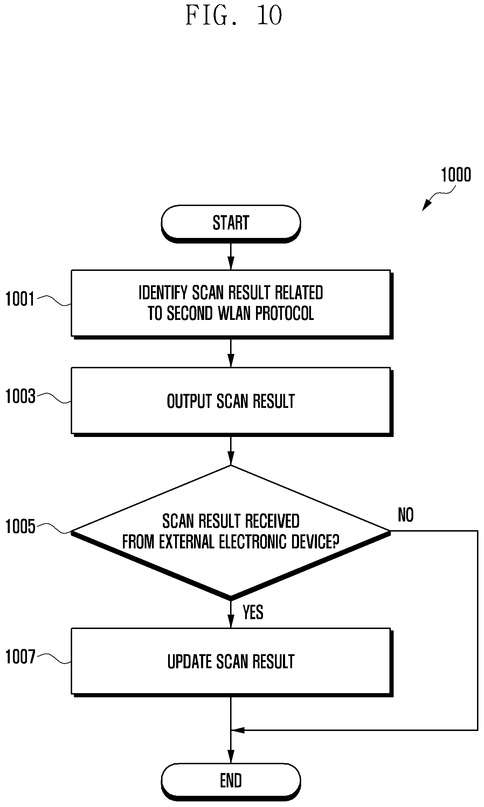

FIG. 10 is a flowchart 1000 for outputting a scan result based on a second WLAN protocol in an electronic device according to an embodiment. In the following embodiment, respective operations may be performed in sequence, but are not necessarily performed in sequence. For example, the order of respective operations may be changed, and at least two operations may be performed in parallel. For example, the electronic device in FIG. 10 may be the electronic device 101 in FIG. 1, FIG. 2, FIG. 3, FIG. 4, FIG. 5, or FIG. 6.

Referring to FIG. 10, according to an embodiment, the electronic device (e.g., the electronic device 101) or the processor (e.g., the processor 120 in FIG. 1 or a processor 500 in FIG. 5) may identify a scan result related to a second WLAN protocol performed in the electronic device 101, in operation 1001, in case that a cooperative scan related to the second WLAN protocol is performed in the electronic device and an external electronic device (e.g., external electronic device 1 210) (e.g., operation 711 in FIG. 7). For example, the scan result related to the second WLAN protocol may include at least one external electronic device with which the electronic device 101 is capable of performing WLAN communication based on the second WLAN protocol.

According to an embodiment, the electronic device (e.g., the electronic device 101) or the processor (e.g., the processor 120 or 500) may output a scan result related to the second WLAN protocol performed in the electronic device 101 in operation 1003. For example, the processor 500 may control the output device of the electronic device 101 to output a scan result related to the second WLAN protocol performed in the electronic device 101. For example, the output device of the electronic device 101 may include at least one of a display, a speaker, or a vibration module operatively connected to the electronic device 101.

According to an embodiment, the electronic device (e.g., the electronic device 101) or the processor (e.g., the processor 120 or 500) may identify whether a scan result related to the second WLAN protocol is received from the external electronic device (e.g., external electronic device 1 210) in operation 1005.

According to an embodiment, the electronic device (e.g., the electronic device 101) or the processor (e.g., the processor 120 or 500) may end an embodiment for outputting a scan result based on the second WLAN protocol, in case that no scan result related to the second WLAN protocol is received from the external electronic device (e.g., external electronic device 1 210) (e.g., "No" in operation 1005).

According to an embodiment, the electronic device (e.g., the electronic device 101) or the processor (e.g., the processor 120 or 500) may update a scan result related to the second WLAN protocol, in operation 1007, in case of receiving a scan result related to the second WLAN protocol from the external electronic device (e.g., external electronic device 1 210) (e.g., "Yes" in operation 1005). For example, the processor 500 may update the second WLAN protocol-related scan result currently output through the output device, based on the second WLAN protocol-related scan result received from external electronic device 1 210. For example, the update of the scan result may include a series of operations of additionally outputting, through the output device, a scan result different from a scan result related to the second WLAN protocol output through the output device, in the scan result related to the second WLAN protocol received from external electronic device 1 210.

According to an embodiment, the electronic device 101 may identify whether a scan result related to the second WLAN protocol is received from external electronic device 1 210, based on the timepoint of acquiring a scan result configured by first scheduling. In case of receiving a scan result related to the second WLAN protocol, the electronic device 101 may generate a scan result related to the second WLAN protocol, based on the scan result related to the second WLAN protocol received from external electronic device 1 210 and the scan result related to the second WLAN protocol performed in the electronic device 101. The electronic device 101 may output a scan result related to the second WLAN protocol to the outside through the output device. For example, generation of a scan result may include a series of operations of removing a redundant scan result from a scan result related to the second WLAN protocol performed in the electronic device 101 and a scan result related to the second WLAN protocol received from external electronic device 1 210.

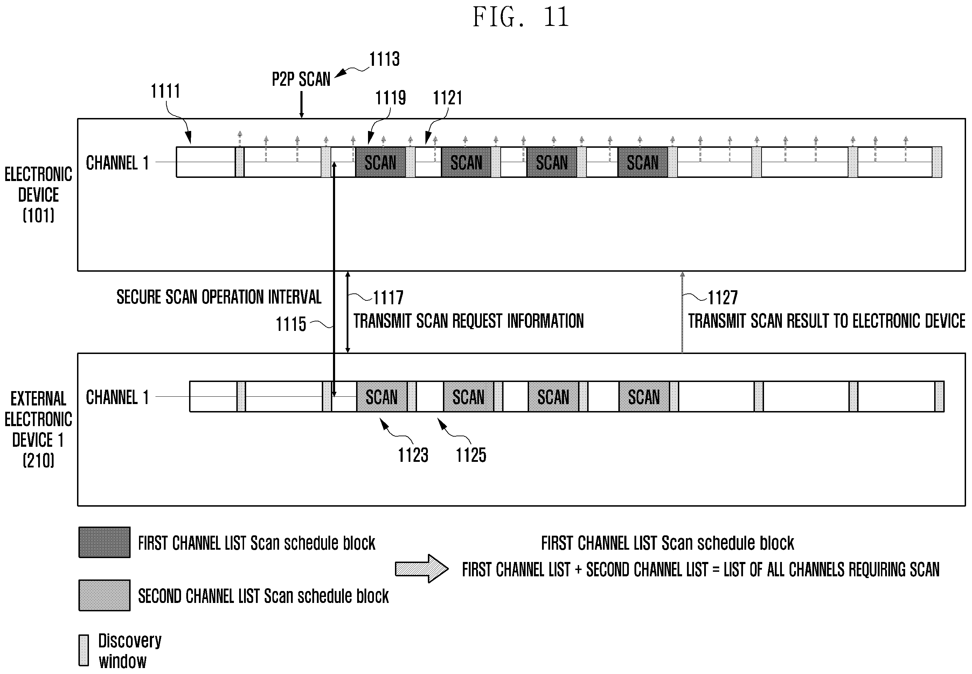

FIG. 11 is an example for performing data communication based on a first WLAN protocol and a search based on a second WLAN protocol in an electronic device according to an embodiment.

Referring to FIG. 11, according to an embodiment, the electronic device 101 and external electronic device 1 210 may perform data communication based on NAN communication, based on a first scheduling result (e.g., operation 1111). For example, the electronic device 101 and external electronic device 1 210 may perform data communication based on NAN communication through a first channel in a first frequency band. For example, the first frequency band may include an approximate 2.4GHz band, an approximate 5GHz band, or an approximate 6GHz band. For example, the data communication based on the NAN communication may include a series of operations in which the electronic device 101 and external electronic device 1 210 included in the same NAN cluster transmit or receive data through an NDP configured between discovery windows.

According to an embodiment, the electronic device 101 may identify whether an event related to a scan (or search) based on the second WLAN protocol occurs during data communication with external electronic device 1 210 based on NAN communication. For example, an event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol. For example, the second WLAN protocol may be a heterogeneous WLAN protocol different from the first WLAN protocol, and may include at least one of WLAN-based direct communication (e.g., Wi-Fi direct), a mobile hotspot, or Wi-Fi legacy. For example, Wi-Fi legacy may include a communication scheme in which the electronic device 101 performs WLAN communication through an access point (AP). For example, the electronic device 101 may operate in a station mode (STA mode) for connecting to an access point (AP) in Wi-Fi legacy.

According to an embodiment, in case that an event related to a scan based on the second WLAN protocol occurs (e.g., operation 1113) during data communication with external electronic device 1 210 based on NAN communication, the electronic device 101 may identify whether to perform a scan for the second WLAN protocol in cooperation with external electronic device 1 210. For example, in case of determining that external electronic device 1 210 supports a cooperative scan related to the second WLAN protocol, based on the capability of external electronic device 1 210, the electronic device 101 may determine to perform a scan for the second WLAN protocol in cooperation with external electronic device 1 210. For example, the capability of external electronic device 1 210 may be acquired from external electronic device 1 210 through NAN communication (e.g., SDF, NDP, or NAF) or out of band (OOB) communication. For example, in case of identifying that external electronic device 1 210 supports a cooperative scan related to the second WLAN protocol, based on a cooperative scan-related identification request message and a response message corresponding to the cooperative scan-related identification request message, the electronic device 101 may determine to perform a scan for the second WLAN protocol in cooperation with external electronic device 1 210. For example, the identification request message and/or the response message may be transmitted and/or received through NAN communication (e.g., SDF, NDP, or NAF) or OOB communication.

For example, in case that information regarding the state of the channel with external electronic device 1 210 satisfies a designated reference channel condition, the electronic device 101 may determine to perform a scan for the second WLAN protocol in cooperation with external electronic device 1 210. For example, states in which the designated reference channel condition is satisfied may include states in which information regarding the state of the channel with external electronic device 1 210 exceeds a designated reference channel value.

For example, in case that the distance from external electronic device 1 210 satisfies a designated reference distance condition, the electronic device 101 may determine to perform a scan for the second WLAN protocol in cooperation with external electronic device 1 210. For example, states in which the designated reference distance condition is satisfied may include states in which the distance from external electronic device 1 210 is equal to or less than a designated reference distance.

For example, in case of determining to perform a scan based on the second WLAN protocol in cooperation with external electronic device 1 210, the electronic device 101 may identify (or determine) a channel for a scan based on the second WLAN protocol in the electronic device 101 and external electronic device 1 210.

For example, the electronic device 101 may configure a time interval for a scan based on the second WLAN protocol, based on at least one of channel information (e.g., the number of channels of the first group) for performing a scan in the electronic device 101, channel information (e.g., the number of channels of the second group) for performing a scan in external electronic device 1 210, the type of services provided through the first WLAN protocol, or the type of services provided through the second WLAN protocol. For example, in case that a relatively fast scan of the second WLAN protocol is necessary, based on the type of services provided through the second WLAN protocol, the electronic device 101 may configure a relatively large size of a time interval for a scan based on the second WLAN protocol, for the sake of a relatively fast scan. For example, the configuration of the time interval for a scan based on the second WLAN protocol may include a series of operations for determining at least one of the size of a time interval for a scan based on the second WLAN protocol, the scan starting timepoint, the scan ending timepoint, the scan cycle, or the timepoint at which a scan result is acquired in the electronic device 101. For example, at least one of the scan starting timepoint, the scan ending timepoint, the scan cycle, or the timepoint at which a scan result is acquired may be configured based on (or with reference to) a discovery window.

For example, the electronic device 101 may perform second scheduling for data communication with external electronic device 1 210 based on the first WLAN protocol, based on the configuration of a time interval for a scan based on the second WLAN protocol. For example, the second scheduling may include a series of operations of updating first scheduling for data communication with external electronic device 1 210 based on the first WLAN protocol, based on the configuration of a time interval for a scan based on the second WLAN protocol.

According to an embodiment, in case of determining to perform a scan based on the second WLAN protocol in cooperation with external electronic device 1 210, the electronic device 101 may transmit a second scheduling result to external electronic device 1 210 to secure a time interval for performing a scan based on the second WLAN protocol in external electronic device 1 210 (e.g., operation 1115). For example, the second scheduling result may be transmitted through NAN communication.

According to an embodiment, the electronic device 101 may transmit scan request information (or scan request message) including configuration information of a time interval for a scan based on the second WLAN protocol to external electronic device 1 210 (e.g., operation 1117). For example, the scan request information (or the scan request message) may be transmitted through NAN communication or OOB communication.

According to an embodiment, the electronic device 101 may perform a scan related to the second WLAN protocol, based on the configuration of a time interval for a scan based on the second WLAN protocol (e.g., operation 1119). For example, in case that the starting timepoint of a scan related to the second WLAN protocol arrives, the electronic device 101 may perform a scan related to the second WLAN protocol with regard to channels included in the first group for a time interval related to the second WLAN protocol. For example, the time interval related to the second WLAN protocol may include time resources allocated for a scan based on the second WLAN protocol between discovery windows.

According to an embodiment, external electronic device 1 210 may perform a scan related to the second WLAN protocol, based on the configuration information of a time interval for a scan based on the second WLAN protocol received from the electronic device 101 (e.g., operation 1123). For example, in case that the starting timepoint of a scan related to the second WLAN protocol configured based on configuration information of a time interval for a scan based on the second WLAN protocol arrives, external electronic device 1 210 may perform a scan related to the second WLAN protocol regarding channels included in the second group for a time interval related to the second WLAN protocol.

According to an embodiment, the electronic device 101 and external electronic device 1 210 may perform data communication related to the first WLAN protocol, based on the second scheduling result (e.g., operation 1121 and operation 1125). For example, the electronic device 101 and external electronic device 1 210 may perform data communication related to the first WLAN protocol through at least a portion of the remaining time interval other than the time interval for a scan based on the second WLAN protocol, between discovery windows.

According to an embodiment, external electronic device 1 210 may transmit, to the electronic device 101, a second WLAN protocol-related scan result, based on configuration information of a time interval for a scan based on the second WLAN protocol received from the electronic device 101 (e.g., operation 1127). For example, external electronic device 1 210 may transmit a scan result related to the second WLAN protocol to the electronic device 101 in case that the timepoint of acquisition of a scan result configured based on configuration information of a time interval for a scan based on the second WLAN protocol arrives. For example, the scan result related to the second WLAN protocol may be transmitted through NAN communication (e.g., SDF, NDP, or NAF) or OOB communication.

According to an embodiment, the electronic device 101 may output, through the output device, a second WLAN protocol-related scan result performed in the electronic device 101 and/or a second WLAN protocol-related scan result generated based on a second WLAN protocol-related scan result received from external electronic device 1 210. For example, the electronic device 101 may output a second WLAN protocol-related scan result performed in the electronic device 101 through the output device of the electronic device 101. In case of receiving a second WLAN protocol-related scan result from external electronic device 1 210, the electronic device 101 may update the second WLAN protocol-related scan result output through the output device, based on the second WLAN protocol-related scan result received from external electronic device 1 210. For example, the scan result update may include a series of operations of additionally outputting, through the output device, a scan result different from a second WLAN protocol-related scan result output through the output device, in the second WLAN protocol-related scan result received from external electronic device 1 210. For example, the output device of the electronic device 101 may include at least one of a display, a speaker, or a vibration module operatively connected to the electronic device 101.

For example, the electronic device 101 may merge the second WLAN protocol-related scan result performed in the electronic device 101 and the second WLAN protocol-related scan result received from external electronic device 1 210, and may output the merged scan result through the output device of the electronic device 101.

According to an embodiment, after transmitting configuration information of a time interval for a scan based on the second WLAN protocol to external electronic device 1 210, the electronic device 101 may transmit scheduling update information (or second scheduling result).

According to an embodiment, the electronic device 101 may substantially simultaneously transmit configuration information of a time interval for a scan based on the second WLAN protocol and scheduling update information (or second scheduling result) to external electronic device 1 210.

According to an embodiment, the electronic device 101 and external electronic device 1 210 may update (or restore) scheduling for data communication based on the first WLAN protocol, based on termination of the scan related to the second WLAN protocol. For example, in case that the scan related to the second WLAN protocol is ended, the electronic device 101 and external electronic device 1 210 may restore scheduling related to data communication based on the first WLAN protocol to the scheduling (e.g., first scheduling) before performing a scan based on the second WLAN protocol.

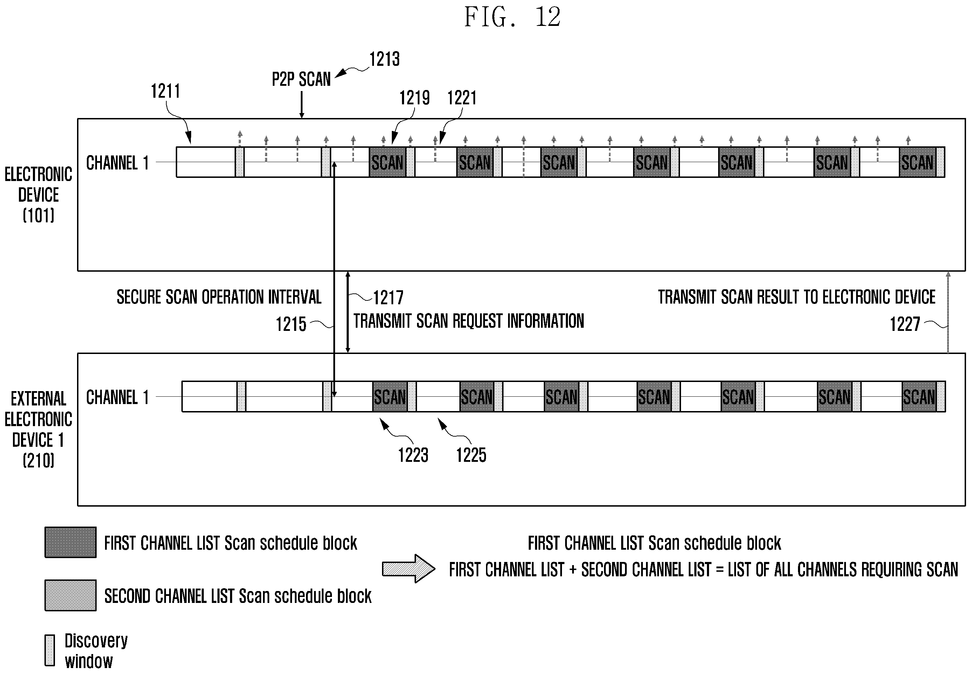

FIG. 12 is an example for performing data communication based on a first WLAN protocol and a search based on a second WLAN protocol in an electronic device according to an embodiment.

Referring to FIG. 12, according to an embodiment, the electronic device 101 and external electronic device 1 210 may perform data communication based on NAN communication, based on a first scheduling result (e.g., operation 1211). For example, the electronic device 101 and external electronic device 1 210 may perform data communication based on NAN communication through a first channel in a first frequency band. For example, the first frequency band may include an approximate 2.4GHz band, an approximate 5GHz band, or an approximate 6GHz band.

According to an embodiment, the electronic device 101 may identify whether an event related to a scan (or search) based on the second WLAN protocol occurs during data communication with external electronic device 1 210 based on NAN communication. For example, an event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol. For example, the second WLAN protocol may be a heterogeneous WLAN protocol different from the first WLAN protocol, and may include at least one of WLAN-based direct communication (e.g., Wi-Fi direct), a mobile hotspot, or Wi-Fi legacy.

According to an embodiment, in case that an event related to a scan based on the second WLAN protocol occurs (e.g., operation 1213) during data communication with external electronic device 1 210 based on NAN communication, the electronic device 101 may identify whether to perform a scan for the second WLAN protocol in cooperation with external electronic device 1 210. For example, in case of determining that external electronic device 1 210 supports a cooperative scan related to the second WLAN protocol, based on the capability of external electronic device 1 210, the electronic device 101 may determine to perform a scan for the second WLAN protocol in cooperation with external electronic device 1 210. For example, in case of identifying that external electronic device 1 210 supports a cooperative scan related to the second WLAN protocol, based on a cooperative scan-related identification request message and a response message corresponding to the cooperative scan-related identification request message, the electronic device 101 may determine to perform a scan for the second WLAN protocol in cooperation with external electronic device 1 210.

For example, in case that information regarding the state of the channel with external electronic device 1 210 satisfies a designated reference channel condition, the electronic device 101 may determine to perform a scan for the second WLAN protocol in cooperation with external electronic device 1 210. For example, states in which the designated reference channel condition is satisfied may include states in which information regarding the state of the channel with external electronic device 1 210 exceeds a designated reference channel value.

For example, in case that the distance from external electronic device 1 210 satisfies a designated reference distance condition, the electronic device 101 may determine to perform a scan for the second WLAN protocol in cooperation with external electronic device 1 210. For example, states in which the designated reference distance condition is satisfied may include states in which the distance from external electronic device 1 210 is equal to or less than a designated reference distance.

For example, in case of determining to perform a scan based on the second WLAN protocol in cooperation with external electronic device 1 210, the electronic device 101 may identify (or determine) a channel for a scan based on the second WLAN protocol in the electronic device 101 and external electronic device 1 210.

For example, the electronic device 101 may configure a time interval for a scan based on the second WLAN protocol, based on at least one of channel information (e.g., the number of channels of the first group) for performing a scan in the electronic device 101, channel information (e.g., the number of channels of the second group) for performing a scan in external electronic device 1 210, the type of services provided through the first WLAN protocol, or the type of services provided through the second WLAN protocol. For example, in case of determining that the quality of service (QoS) of data communication with external electronic device 1 210 is important, based on the type of services provided through the first WLAN protocol, the electronic device 101 may determine that a relatively large amount of time resources is required for data communication with external electronic device 1 210, based on the first WLAN protocol. The electronic device 101 may configure a relatively small size of a time interval for a scan based on the second WLAN protocol such that a relatively large amount of time resources is allocated for data communication with external electronic device 1 210 based on the first WLAN protocol. For example, the configuration of the time interval for a scan based on the second WLAN protocol may include a series of operations for determining at least one of the size of a time interval for a scan based on the second WLAN protocol, the scan starting timepoint, the scan ending timepoint, the scan cycle, or the timepoint at which a scan result is acquired in the electronic device 101. For example, at least one of the scan starting timepoint, the scan ending timepoint, the scan cycle, or the timepoint at which a scan result is acquired may be configured based on (or with reference to) a discovery window.

For example, the electronic device 101 may perform second scheduling for data communication with external electronic device 1 210 based on the first WLAN protocol, based on the configuration of a time interval for a scan based on the second WLAN protocol. For example, the second scheduling may include a series of operations of updating first scheduling for data communication with external electronic device 1 210 based on the first WLAN protocol, based on the configuration of a time interval for a scan based on the second WLAN protocol.

According to an embodiment, in case of determining to perform a scan based on the second WLAN protocol in cooperation with external electronic device 1 210, the electronic device 101 may transmit a second scheduling result to external electronic device 1 210 to secure a time interval for performing a scan based on the second WLAN protocol in external electronic device 1 210 (e.g., operation 1215). For example, the second scheduling result may be transmitted through NAN communication.

According to an embodiment, the electronic device 101 may transmit scan request information (or scan request message) including configuration information of a time interval for a scan based on the second WLAN protocol to external electronic device 1 210 (e.g., operation 1217). For example, the scan request information (or the scan request message) may be transmitted through NAN communication or OOB communication.

According to an embodiment, the electronic device 101 may perform a scan related to the second WLAN protocol, based on the configuration of a time interval for a scan based on the second WLAN protocol (e.g., operation 1219). For example, in case that the starting timepoint of a scan related to the second WLAN protocol arrives, the electronic device 101 may perform a scan related to the second WLAN protocol with regard to channels included in the first group for a time interval related to the second WLAN protocol. For example, the time interval related to the second WLAN protocol may include time resources allocated for a scan based on the second WLAN protocol between discovery windows.

According to an embodiment, external electronic device 1 210 may perform a scan related to the second WLAN protocol, based on the configuration information of a time interval for a scan based on the second WLAN protocol received from the electronic device 101 (e.g., operation 1223). For example, in case that the starting timepoint of a scan related to the second WLAN protocol configured based on configuration information of a time interval for a scan based on the second WLAN protocol arrives, external electronic device 1 210 may perform a scan related to the second WLAN protocol regarding channels included in the second group for a time interval related to the second WLAN protocol.

According to an embodiment, the electronic device 101 and external electronic device 1 210 may perform data communication related to the first WLAN protocol, based on the second scheduling result (e.g., operation 1221 and operation 1225). For example, the electronic device 101 and external electronic device 1 210 may perform data communication related to the first WLAN protocol through at least a portion of the remaining time interval other than the time interval for a scan based on the second WLAN protocol, between discovery windows.

According to an embodiment, external electronic device 1 210 may transmit, to the electronic device 101, a second WLAN protocol-related scan result, based on configuration information of a time interval for a scan based on the second WLAN protocol received from the electronic device 101 (e.g., operation 1227). For example, external electronic device 1 210 may transmit a scan result related to the second WLAN protocol to the electronic device 101 in case that the timepoint of acquisition of a scan result configured based on configuration information of a time interval for a scan based on the second WLAN protocol arrives. For example, the scan result related to the second WLAN protocol may be transmitted through NAN communication (e.g., SDF, NDP, or NAF) or OOB communication.

According to an embodiment, the electronic device 101 may output, through the output device, a second WLAN protocol-related scan result performed in the electronic device 101 and/or a second WLAN protocol-related scan result generated based on a second WLAN protocol-related scan result received from external electronic device 1 210. For example, the electronic device 101 may output a second WLAN protocol-related scan result performed in the electronic device 101 through the output device of the electronic device 101. In case of receiving a second WLAN protocol-related scan result from external electronic device 1 210, the electronic device 101 may update the second WLAN protocol-related scan result output through the output device, based on the second WLAN protocol-related scan result received from external electronic device 1 210. For example, the scan result update may include a series of operations of additionally outputting, through the output device, a scan result different from a second WLAN protocol-related scan result output through the output device, in the second WLAN protocol-related scan result received from external electronic device 1 210. For example, the output device of the electronic device 101 may include at least one of a display, a speaker, or a vibration module operatively connected to the electronic device 101.

For example, the electronic device 101 may merge the second WLAN protocol-related scan result performed in the electronic device 101 and the second WLAN protocol-related scan result received from external electronic device 1 210, and may output the merged scan result through the output device of the electronic device 101.

According to an embodiment, after transmitting configuration information of a time interval for a scan based on the second WLAN protocol to external electronic device 1 210, the electronic device 101 may transmit scheduling update information (or second scheduling result).

According to an embodiment, the electronic device 101 may substantially simultaneously transmit configuration information of a time interval for a scan based on the second WLAN protocol and scheduling update information (or second scheduling result) to external electronic device 1 210.

According to an embodiment, the electronic device 101 and external electronic device 1 210 may update (or restore) scheduling for data communication based on the first WLAN protocol, based on termination of the scan related to the second WLAN protocol. For example, in case that the scan related to the second WLAN protocol is ended, the electronic device 101 and external electronic device 1 210 may restore scheduling related to data communication based on the first WLAN protocol to the scheduling (e.g., first scheduling) before performing a scan based on the second WLAN protocol.

According to an embodiment, in case that a relatively fast scan of the second WLAN protocol is necessary based on the type of services provided through the second WLAN protocol, as in FIG. 11, the electronic device 101 may configure a relatively large size of a time interval for a scan based on the second WLAN protocol, for the sake of a relatively fast scan. In case that the QoS of data communication with external electronic device 1 210 is deemed to be important, based on the type of services provided through the first WLAN protocol, as in FIG. 12, the electronic device 101 may configure a relatively small size of a time interval for a scan based on the second WLAN protocol such that a relatively large amount of time resources is allocated to data communication with external electronic device 1 210 based on the first WLAN protocol.

For example, in case that the time interval size for a scan based on the second WLAN protocol is configured to have a relatively large size, as in FIG. 11, the electronic device 101 and external electronic device 1 210 may acquire a scan result based on the second WLAN protocol more quickly than in case that the time interval size for a scan based on the second WLAN protocol is configured to have a relatively small size, as in FIG. 12. For example, the number of scans of the second WLAN protocol based on FIG. 11 may be smaller than the number of scans of the second WLAN protocol based on FIG. 12. For example, a scan of the second WLAN protocol based on FIG. 11 may be ended faster than a scan of the second WLAN protocol based on FIG. 12.

For example, in case that the time interval for a scan based on the second WLAN protocol is configured to have a relatively small size, as in FIG. 12, the electronic device 101 and external electronic device 1 210 may secure more time resources available for data communication based on the first WLAN protocol between discovery windows than in case that the time interval for a scan based on the second WLAN protocol is configured to have a relatively large size, as in FIG. 11. In case of performing a scan of the second WLAN protocol based on FIG. 12, the electronic device 101 and external electronic device 1 210 may ensure a higher QoS of data communication based on the first WLAN protocol than in case of performing a scan of the second WLAN protocol based on FIG. 11.

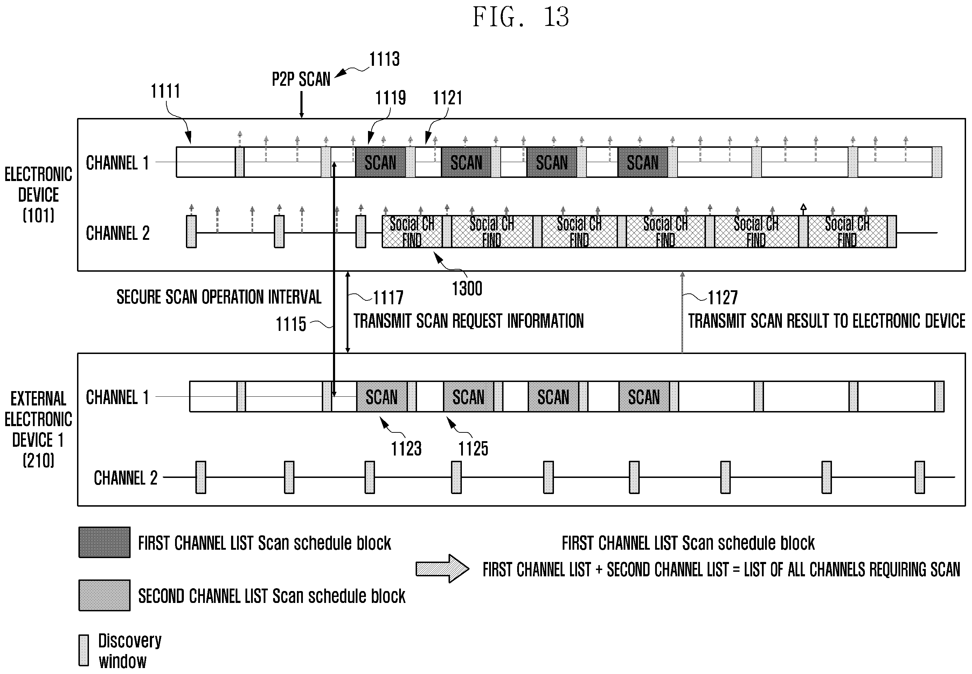

FIG. 13 is an example for performing data communication based on a first WLAN protocol and a search based on a second WLAN protocol in an electronic device according to an embodiment.

Referring to FIG. 13, according to an embodiment, the electronic device 101 and external electronic device 1 210 may include multiple cores as in FIG. 6. For example, the electronic device 101 and external electronic device 1 210 may perform NAN communication through a first channel (e.g., channel 149) in a first frequency band (e.g., about 5 GHz band) and a second channel (e.g., channel 6) in a second frequency band (e.g., about 2.4 GHz band). For example, the electronic device 101 and external electronic device 1 210 may perform data communication based on NAN communication, based on a first scheduling result, through the first channel (e.g., channel 149) in the first frequency band (e.g., a 5GHz band) (e.g., operation 1111). For example, data communication based on NAN communication may include a series of operations in which the electronic device 101 and external electronic device 1 210 included in the same NAN cluster transmit or receive data through an NDP configured between discovery windows.

According to an embodiment, the electronic device 101 may identify whether an event related to a scan (or search) based on the second WLAN protocol occurs during data communication with external electronic device 1 210 based on NAN communication. For example, an event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol. For example, the second WLAN protocol may be a heterogeneous WLAN protocol different from the first WLAN protocol, and may include at least one of WLAN-based direct communication (e.g., Wi-Fi direct), a mobile hotspot, or Wi-Fi legacy.

According to an embodiment, in case that an event related to a scan based on the second WLAN protocol occurs (e.g., operation 1113) during data communication with external electronic device 1 210 based on NAN communication, the electronic device 101 may identify whether to perform a scan related to the second WLAN protocol regarding the first frequency band used for data communication with external electronic device 1 210 in cooperation with external electronic device 1 210. For example, in case of determining that external electronic device 1 210 supports a cooperative scan related to the second WLAN protocol, based on the capability of external electronic device 1 210, the electronic device 101 may determine to perform a scan for the second WLAN protocol in cooperation with external electronic device 1 210. For example, in case of identifying that external electronic device 1 210 supports a cooperative scan related to the second WLAN protocol, based on a cooperative scan-related identification request message and a response message corresponding to the cooperative scan-related identification request message, the electronic device 101 may determine to perform a scan for the second WLAN protocol in cooperation with external electronic device 1 210.

For example, in case that information regarding the state of the channel with external electronic device 1 210 satisfies a designated reference channel condition, the electronic device 101 may determine to perform a scan for the second WLAN protocol in cooperation with external electronic device 1 210. For example, states in which the designated reference channel condition is satisfied may include states in which information regarding the state of the channel with external electronic device 1 210 exceeds a designated reference channel value.

For example, in case that the distance from external electronic device 1 210 satisfies a designated reference distance condition, the electronic device 101 may determine to perform a scan for the second WLAN protocol in cooperation with external electronic device 1 210. For example, states in which the designated reference distance condition is satisfied may include states in which the distance from external electronic device 1 210 is equal to or less than a designated reference distance.

For example, in case of determining to perform a scan based on the second WLAN protocol regarding the first frequency band used for data communication with external electronic device 1 210 in cooperation with external electronic device 1 210, the electronic device 101 may identify (or determine) a channel in the first frequency band for a scan based on the second WLAN protocol in the electronic device 101 and external electronic device 1 210.

For example, the electronic device 101 may configure a time interval for a scan based on the second WLAN protocol, based on at least one of channel information (e.g., the number of channels of the first group) for performing a scan in the electronic device 101, channel information (e.g., the number of channels of the second group) for performing a scan in external electronic device 1 210, the type of services provided through the first WLAN protocol, or the type of services provided through the second WLAN protocol. For example, in case that a relatively fast scan of the second WLAN protocol is necessary, based on the type of services provided through the second WLAN protocol, the electronic device 101 may configure a relatively large size of a time interval for a scan based on the second WLAN protocol, for the sake of a relatively fast scan. For example, the configuration of the time interval for a scan based on the second WLAN protocol may include a series of operations for determining at least one of the size of a time interval for a scan based on the second WLAN protocol, the scan starting timepoint, the scan ending timepoint, the scan cycle, or the timepoint at which a scan result is acquired in the electronic device 101. For example, at least one of the scan starting timepoint, the scan ending timepoint, the scan cycle, or the timepoint at which a scan result is acquired may be configured based on (or with reference to) a discovery window.

For example, the electronic device 101 may perform second scheduling for data communication with external electronic device 1 210 based on the first WLAN protocol, based on the configuration of a time interval for a scan based on the second WLAN protocol. For example, the second scheduling may include a series of operations of updating first scheduling for data communication with external electronic device 1 210 based on the first WLAN protocol, based on the configuration of a time interval for a scan based on the second WLAN protocol.

According to an embodiment, in case of determining to perform a scan based on the second WLAN protocol in cooperation with external electronic device 1 210, the electronic device 101 may transmit a second scheduling result to external electronic device 1 210 to secure a time interval for performing a scan based on the second WLAN protocol in external electronic device 1 210 (e.g., operation 1115). For example, the second scheduling result may be transmitted through NAN communication.

According to an embodiment, the electronic device 101 may transmit scan request information (or scan request message) including configuration information of a time interval for a scan based on the second WLAN protocol to external electronic device 1 210 (e.g., operation 1117). For example, the scan request information (or the scan request message) may be transmitted through NAN communication or OOB communication.

According to an embodiment, the electronic device 101 may perform a scan related to the second WLAN protocol regarding the first frequency band, based on the configuration of a time interval for a scan based on the second WLAN protocol (e.g., operation 1119). For example, in case that the starting timepoint of a scan related to the second WLAN protocol arrives, the electronic device 101 may perform a scan related to the second WLAN protocol with regard to channels in the first frequency band included in the first group for a time interval related to the second WLAN protocol. For example, the time interval related to the second WLAN protocol may include time resources allocated for a scan based on the second WLAN protocol between discovery windows.

According to an embodiment, external electronic device 1 210 may perform a scan related to the second WLAN protocol regarding the first frequency band, based on the configuration information of a time interval for a scan based on the second WLAN protocol received from the electronic device 101 (e.g., operation 1123). For example, in case that the starting timepoint of a scan related to the second WLAN protocol configured based on configuration information of a time interval for a scan based on the second WLAN protocol arrives, external electronic device 1 210 may perform a scan related to the second WLAN protocol regarding channels in the first frequency band included in the second group for a time interval related to the second WLAN protocol.

According to an embodiment, the electronic device 101 and external electronic device 1 210 may perform data communication related to the first WLAN protocol, based on the second scheduling result (e.g., operation 1121 and operation 1125). For example, the electronic device 101 and external electronic device 1 210 may perform data communication related to the first WLAN protocol through at least a portion of the remaining time interval other than the time interval for a scan based on the second WLAN protocol, between discovery windows, in the first frequency band.

According to an embodiment, external electronic device 1 210 may transmit, to the electronic device 101, a second WLAN protocol-related scan result, based on configuration information of a time interval for a scan based on the second WLAN protocol received from the electronic device 101 (e.g., operation 1127). For example, external electronic device 1 210 may transmit a scan result related to the second WLAN protocol to the electronic device 101 in case that the timepoint of acquisition of a scan result configured based on configuration information of a time interval for a scan based on the second WLAN protocol arrives. For example, the scan result related to the second WLAN protocol may be transmitted through NAN communication (e.g., SDF, NDP, or NAF) or OOB communication.

According to an embodiment, the electronic device 101 may output, through the output device, a second WLAN protocol-related scan result performed in the electronic device 101 and/or a second WLAN protocol-related scan result generated based on a second WLAN protocol-related scan result received from external electronic device 1 210. For example, the electronic device 101 may output a second WLAN protocol-related scan result performed in the electronic device 101 through the output device of the electronic device 101. In case of receiving a second WLAN protocol-related scan result from external electronic device 1 210, the electronic device 101 may update the second WLAN protocol-related scan result output through the output device, based on the second WLAN protocol-related scan result received from external electronic device 1 210. For example, the scan result update may include a series of operations of additionally outputting, through the output device, a scan result different from a second WLAN protocol-related scan result output through the output device, in the second WLAN protocol-related scan result received from external electronic device 1 210. For example, the output device of the electronic device 101 may include at least one of a display, a speaker, or a vibration module operatively connected to the electronic device 101.

For example, the electronic device 101 may merge the second WLAN protocol-related scan result performed in the electronic device 101 and the second WLAN protocol-related scan result received from external electronic device 1 210, and may output the merged scan result through the output device of the electronic device 101.

According to an embodiment, the electronic device 101 may perform a scan related to the second WLAN protocol independently of the first frequency band with regard to the second frequency band (e.g., operation 1300). For example, in case that radio communication regarding the first frequency band and radio communication regarding the second frequency band may be performed simultaneously through multiple cores, the electronic device 101 may perform a scan related to the second WLAN protocol with regard to the second frequency band independently of a scan related to the second WLAN protocol regarding the first frequency band. In case that no data communication based on NAN communication is performed through the second frequency band, the electronic device 101 may perform a scan related to the second WLAN protocol by using a time resource other than the discovery window in the second frequency band.

According to an embodiment, the electronic device 101 may output, through the output device, a scan result related to the second WLAN protocol regarding the second frequency band together with a scan result related to the second WLAN protocol regarding the first frequency band. For example, the electronic device 101 may output a scan result related to the second WLAN protocol through the output device of the electronic device 101 each time the same identifies at least one of a scan result of the second WLAN protocol in the first frequency band in cooperation with external electronic device 1 210 or a scan result of the second WLAN protocol in the second frequency band performed by the electronic device 101. For example, the output device of the electronic device 101 may update a scan result related to the second WLAN protocol each time the same identifies at least one of a scan result of the second WLAN protocol in the first frequency band in cooperation with external electronic device 1 210 or a scan result of the second WLAN protocol in the second frequency band performed by the electronic device 101.

For example, in case of termination of a scan of the second WLAN protocol in the first frequency band in cooperation with external electronic device 1 210 and a scan of the second WLAN protocol in the second frequency band performed in the electronic device 101, the electronic device 101 may merge the scan result of the second WLAN protocol in the first frequency band in cooperation with external electronic device 1 210 and the scan result of the second WLAN protocol in the second frequency band performed in the electronic device 101, and output the merged result through the output device.

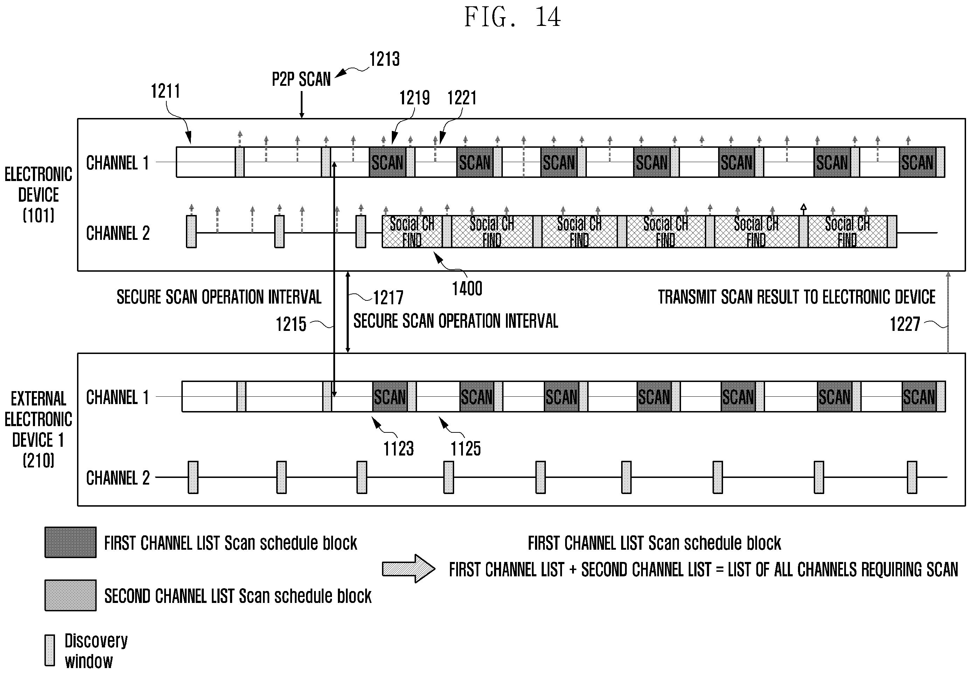

FIG. 14 is an example for performing data communication based on a first WLAN protocol and a search based on a second WLAN protocol in an electronic device according to an embodiment.

Referring to FIG. 14, according to an embodiment, the electronic device 101 and external electronic device 1 210 may include multiple cores as in FIG. 6. For example, the electronic device 101 and external electronic device 1 210 may perform NAN communication through a first channel (e.g., channel 149) in a first frequency band (e.g., about 5 GHz band) and a second channel (e.g., channel 6) in a second frequency band (e.g., about 2.4 GHz band). For example, the electronic device 101 and external electronic device 1 210 may perform data communication based on NAN communication through the first channel (e.g., channel 149) in the first frequency band (e.g., a 5GHz band) (e.g., operation 1211). For example, the electronic device 101 and external electronic device 1 210 may perform data communication based on NAN communication, based on a first scheduling result, through the first channel in the first frequency band.

According to an embodiment, the electronic device 101 may identify whether an event related to a scan (or search) based on the second WLAN protocol occurs during data communication with external electronic device 1 210 based on NAN communication. For example, an event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol. For example, the second WLAN protocol may be a heterogeneous WLAN protocol different from the first WLAN protocol, and may include at least one of WLAN-based direct communication (e.g., Wi-Fi direct), a mobile hotspot, or Wi-Fi legacy.

According to an embodiment, in case that an event related to a scan based on the second WLAN protocol occurs (e.g., operation 1213) during data communication with external electronic device 1 210 based on NAN communication, the electronic device 101 may identify whether to perform a scan related to the second WLAN protocol regarding the first frequency band used for data communication with external electronic device 1 210 in cooperation with external electronic device 1 210. For example, in case of determining that external electronic device 1 210 supports a cooperative scan related to the second WLAN protocol, based on the capability of external electronic device 1 210, the electronic device 101 may determine to perform a scan for the second WLAN protocol in cooperation with external electronic device 1 210. For example, in case of identifying that external electronic device 1 210 supports a cooperative scan related to the second WLAN protocol, based on a cooperative scan-related identification request message and a response message corresponding to the cooperative scan-related identification request message, the electronic device 101 may determine to perform a scan for the second WLAN protocol in cooperation with external electronic device 1 210.

For example, in case that information regarding the state of the channel with external electronic device 1 210 satisfies a designated reference channel condition, the electronic device 101 may determine to perform a scan for the second WLAN protocol in cooperation with external electronic device 1 210. For example, states in which the designated reference channel condition is satisfied may include states in which information regarding the state of the channel with external electronic device 1 210 exceeds a designated reference channel value.

For example, in case that the distance from external electronic device 1 210 satisfies a designated reference distance condition, the electronic device 101 may determine to perform a scan for the second WLAN protocol in cooperation with external electronic device 1 210. For example, states in which the designated reference distance condition is satisfied may include states in which the distance from external electronic device 1 210 is equal to or less than a designated reference distance.

For example, in case of determining to perform a scan based on the second WLAN protocol regarding the first frequency band used for data communication with external electronic device 1 210 in cooperation with external electronic device 1 210, the electronic device 101 may identify (or determine) a channel in the first frequency band for a scan based on the second WLAN protocol in the electronic device 101 and external electronic device 1 210.

For example, the electronic device 101 may configure a time interval for a scan based on the second WLAN protocol, based on at least one of channel information (e.g., the number of channels of the first group) for performing a scan in the electronic device 101, channel information (e.g., the number of channels of the second group) for performing a scan in external electronic device 1 210, the type of services provided through the first WLAN protocol, or the type of services provided through the second WLAN protocol. For example, in case of determining that the quality of service (QoS) of data communication with external electronic device 1 210 is important, based on the type of services provided through the first WLAN protocol, the electronic device 101 may determine that a relatively large amount of time resources is required for data communication with external electronic device 1 210, based on the first WLAN protocol. The electronic device 101 may configure a relatively small size of a time interval for a scan based on the second WLAN protocol such that a relatively large amount of time resources is allocated for data communication with external electronic device 1 210 based on the first WLAN protocol. For example, the configuration of the time interval for a scan based on the second WLAN protocol may include a series of operations for determining at least one of the size of a time interval for a scan based on the second WLAN protocol, the scan starting timepoint, the scan ending timepoint, the scan cycle, or the timepoint at which a scan result is acquired in the electronic device 101. For example, at least one of the scan starting timepoint, the scan ending timepoint, the scan cycle, or the timepoint at which a scan result is acquired may be configured based on (or with reference to) a discovery window.

For example, the electronic device 101 may perform second scheduling for data communication with external electronic device 1 210 based on the first WLAN protocol, based on the configuration of a time interval for a scan based on the second WLAN protocol. For example, the second scheduling may include a series of operations of updating first scheduling for data communication with external electronic device 1 210 based on the first WLAN protocol, based on the configuration of a time interval for a scan based on the second WLAN protocol.

According to an embodiment, in case of determining to perform a scan based on the second WLAN protocol in cooperation with external electronic device 1 210, the electronic device 101 may transmit a second scheduling result to external electronic device 1 210 to secure a time interval for performing a scan based on the second WLAN protocol in external electronic device 1 210 (e.g., operation 1215). For example, the second scheduling result may be transmitted through NAN communication.

According to an embodiment, the electronic device 101 may transmit scan request information (or scan request message) including configuration information of a time interval for a scan based on the second WLAN protocol to external electronic device 1 210 (e.g., operation 1217). For example, the scan request information (or the scan request message) may be transmitted through NAN communication or OOB communication.

According to an embodiment, the electronic device 101 may perform a scan related to the second WLAN protocol regarding the first frequency band, based on the configuration of a time interval for a scan based on the second WLAN protocol (e.g., operation 1219). For example, in case that the starting timepoint of a scan related to the second WLAN protocol configured based on the first scheduling result arrives, the electronic device 101 may perform a scan related to the second WLAN protocol regarding channels in the first frequency band included in the first group for a time interval related to the second WLAN protocol. For example, the time interval related to the second WLAN protocol may include time resources allocated for a scan based on the second WLAN protocol between discovery windows.

According to an embodiment, external electronic device 1 210 may perform a scan related to the second WLAN protocol regarding the first frequency band, based on the configuration information of a time interval for a scan based on the second WLAN protocol received from the electronic device 101 (e.g., operation 1223). For example, in case that the starting timepoint of a scan related to the second WLAN protocol configured based on configuration information of a time interval for a scan based on the second WLAN protocol arrives, external electronic device 1 210 may perform a scan related to the second WLAN protocol regarding channels in the first frequency band included in the second group for a time interval related to the second WLAN protocol.

According to an embodiment, the electronic device 101 and external electronic device 1 210 may perform data communication related to the first WLAN protocol, based on the second scheduling result (e.g., operation 1221 and operation 1225). For example, the electronic device 101 and external electronic device 1 210 may perform data communication related to the first WLAN protocol through at least a portion of the remaining time interval other than the time interval for a scan based on the second WLAN protocol, between discovery windows, in the first frequency band.

According to an embodiment, external electronic device 1 210 may transmit, to the electronic device 101, a second WLAN protocol-related scan result, based on configuration information of a time interval for a scan based on the second WLAN protocol received from the electronic device 101 (e.g., operation 1227). For example, external electronic device 1 210 may transmit a scan result related to the second WLAN protocol to the electronic device 101 in case that the timepoint of acquisition of a scan result configured based on configuration information of a time interval for a scan based on the second WLAN protocol arrives. For example, the scan result related to the second WLAN protocol may be transmitted through NAN communication (e.g., SDF, NDP, or NAF) or OOB communication.

According to an embodiment, the electronic device 101 may output, through the output device, a second WLAN protocol-related scan result performed in the electronic device 101 and/or a second WLAN protocol-related scan result generated based on a second WLAN protocol-related scan result received from external electronic device 1 210.

According to an embodiment, the electronic device 101 may perform a scan related to the second WLAN protocol independently of the first frequency band with regard to the second frequency band (e.g., operation 1400). For example, in case that radio communication regarding the first frequency band and radio communication regarding the second frequency band may be performed simultaneously through multiple cores, the electronic device 101 may perform a scan related to the second WLAN protocol with regard to the second frequency band independently of a scan related to the second WLAN protocol regarding the first frequency band. In case that no data communication based on NAN communication is performed through the second frequency band, the electronic device 101 may perform a scan related to the second WLAN protocol by using a time resource other than the discovery window in the second frequency band.

According to an embodiment, the electronic device 101 may output, through the output device, a scan result related to the second WLAN protocol regarding the second frequency band together with a scan result related to the second WLAN protocol regarding the first frequency band. For example, the electronic device 101 may output a scan result related to the second WLAN protocol through the output device of the electronic device 101 each time the same identifies at least one of a scan result of the second WLAN protocol in the first frequency band in cooperation with external electronic device 1 210 or a scan result of the second WLAN protocol in the second frequency band performed by the electronic device 101. For example, the output device of the electronic device 101 may update a scan result related to the second WLAN protocol each time the same identifies at least one of a scan result of the second WLAN protocol in the first frequency band in cooperation with external electronic device 1 210 or a scan result of the second WLAN protocol in the second frequency band performed by the electronic device 101.

For example, in case of termination of a scan of the second WLAN protocol in the first frequency band in cooperation with external electronic device 1 210 and a scan of the second WLAN protocol in the second frequency band performed in the electronic device 101, the electronic device 101 may merge the scan result of the second WLAN protocol in the first frequency band in cooperation with external electronic device 1 210 and the scan result of the second WLAN protocol in the second frequency band performed in the electronic device 101, and output the merged result through the output device.

According to an embodiment, in case that a relatively fast scan of the second WLAN protocol is necessary based on the type of services provided through the second WLAN protocol, as in FIG. 13, the electronic device 101 may configure a relatively large size of a time interval for a scan based on the second WLAN protocol, for the sake of a relatively fast scan. In case that the QoS of data communication with external electronic device 1 210 is deemed to be important, based on the type of services provided through the first WLAN protocol, as in FIG. 14, the electronic device 101 may configure a relatively small size of a time interval for a scan based on the second WLAN protocol such that a relatively large amount of time resources is allocated to data communication with external electronic device 1 210 based on the first WLAN protocol.

For example, in case that the time interval size for a scan based on the second WLAN protocol is configured to have a relatively large size, as in FIG. 13, the electronic device 101 and external electronic device 1 210 may acquire a scan result based on the second WLAN protocol more quickly than in case that the time interval size for a scan based on the second WLAN protocol is configured to have a relatively small size, as in FIG. 14. For example, the number of scans of the second WLAN protocol based on FIG. 13 may be smaller than the number of scans of the second WLAN protocol based on FIG. 14. For example, a scan of the second WLAN protocol based on FIG. 13 may be ended faster than a scan of the second WLAN protocol based on FIG. 14.

For example, in case that the time interval for a scan based on the second WLAN protocol is configured to have a relatively small size, as in FIG. 14, the electronic device 101 and external electronic device 1 210 may secure more time resources available for data communication based on the first WLAN protocol between discovery windows than in case that the time interval for a scan based on the second WLAN protocol is configured to have a relatively large size, as in FIG. 13. In case of performing a scan of the second WLAN protocol based on FIG. 14, the electronic device 101 and external electronic device 1 210 may ensure a higher QoS of data communication based on the first WLAN protocol than in case of performing a scan of the second WLAN protocol based on FIG. 13.

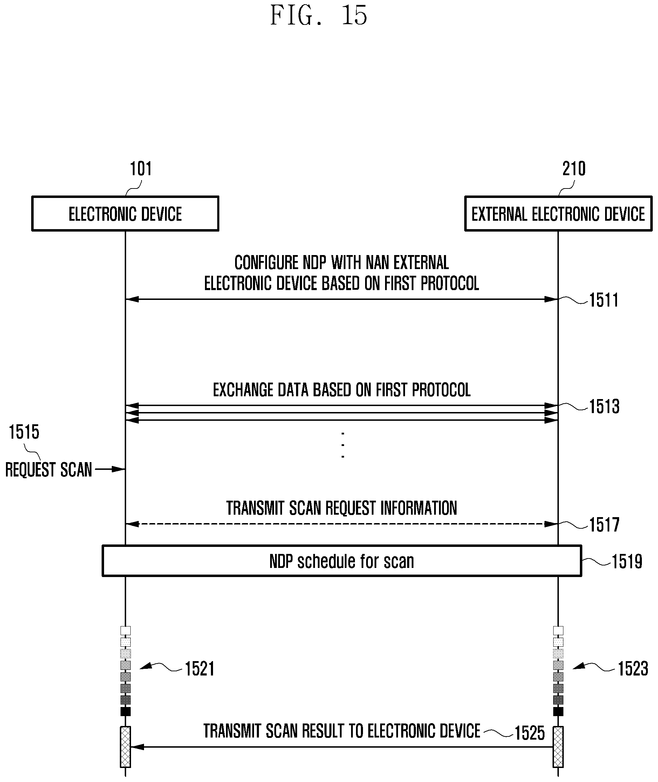

FIG. 15 illustrates an example for performing a search based on a second WLAN protocol with an external electronic device in an electronic device according to an embodiment.

Referring to FIG. 15, according to an embodiment, the electronic device 101 may configure a NAN data path (NDP), based on first scheduling for data communication, with external electronic device 1 210, based on a first WLAN protocol (e.g., NAN communication) (e.g., operation 1511). For example, the NAN data path may be configured based on information related to the setup of a NAN data path (NDP) acquired through a NAN action frame (NAF) transmitted and/or received within a discovery window. For example, the NAN data path may include a radio resource for data communication between the electronic device 101 and external electronic device 1 210 included in the same NAN cluster during an interval between discovery windows.

According to an embodiment, the electronic device 101 may perform at least one of data transmission or reception with external electronic device 1 210 through a NAN data path (NDP) configured based on first scheduling between discovery windows (e.g., operation 1513).

According to an embodiment, the electronic device 101 may identify whether an event related to a scan based on the second WLAN protocol occurs during data communication with external electronic device 1 210 based on the first WLAN protocol. For example, an event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol. For example, the second WLAN protocol may be a heterogeneous WLAN protocol different from the first WLAN protocol, and may include at least one of WLAN-based direct communication (e.g., Wi-Fi direct), a mobile hotspot, or Wi-Fi legacy.

According to an embodiment, in case that an event related to a scan based on the second WLAN protocol occurs (e.g., operation 1515) during data communication with external electronic device 1 210 based on the first WLAN protocol, the electronic device 101 may identify (or determine) whether to perform a scan related to the second WLAN protocol in cooperation with external electronic device 1 210. For example, in case of determining that external electronic device 1 210 supports a cooperative scan related to the second WLAN protocol, based on the capability of external electronic device 1 210, the electronic device 101 may determine to perform a scan for the second WLAN protocol in cooperation with external electronic device 1 210. For example, in case of determining that external electronic device 1 210 supports a cooperative scan related to the second WLAN protocol, based on a cooperative scan-related identification request message and a response message corresponding to the cooperative scan-related identification request message, the electronic device 101 may determine to perform a scan for the second WLAN protocol in cooperation with external electronic device 1 210.

For example, in case that information regarding the state of the channel with external electronic device 1 210 satisfies a designated reference channel condition, the electronic device 101 may determine to perform a scan for the second WLAN protocol in cooperation with external electronic device 1 210. For example, states in which the designated reference channel condition is satisfied may include states in which information regarding the state of the channel with external electronic device 1 210 exceeds a designated reference channel value.

For example, in case that the distance from external electronic device 1 210 satisfies a designated reference distance condition, the electronic device 101 may determine to perform a scan for the second WLAN protocol in cooperation with external electronic device 1 210. For example, states in which the designated reference distance condition is satisfied may include states in which the distance from external electronic device 1 210 is equal to or less than a designated reference distance.

For example, in case of determining to perform a scan based on the second WLAN protocol in cooperation with external electronic device 1 210, the electronic device 101 may identify (or determine) a channel for a scan based on the second WLAN protocol in the electronic device 101 and external electronic device 1 210.

For example, the electronic device 101 may configure a time interval for a scan based on the second WLAN protocol, based on at least one of channel information (e.g., the number of channels of the first group) for performing a scan in the electronic device 101, channel information (e.g., the number of channels of the second group) for performing a scan in external electronic device 1 210, the type of services provided through the first WLAN protocol, or the type of services provided through the second WLAN protocol. For example, in case of determining that the quality of service (QoS) of data communication with external electronic device 1 210 is important, based on the type of services provided through the first WLAN protocol, the electronic device 101 may determine that a relatively large amount of time resources is required for data communication with external electronic device 1 210, based on the first WLAN protocol. The electronic device 101 may configure a relatively small size of a time interval for a scan based on the second WLAN protocol such that a relatively large amount of time resources is allocated for data communication with external electronic device 1 210 based on the first WLAN protocol. For example, the configuration of the time interval for a scan based on the second WLAN protocol may include a series of operations for determining at least one of the size of a time interval for a scan based on the second WLAN protocol, the scan starting timepoint, the scan ending timepoint, the scan cycle, or the timepoint at which a scan result is acquired in the electronic device 101. For example, at least one of the scan starting timepoint, the scan ending timepoint, the scan cycle, or the timepoint at which a scan result is acquired may be configured based on (or with reference to) a discovery window.

According to an embodiment, the electronic device 101 may transmit scan request information including configuration information of a time interval for a scan based on the second WLAN protocol to external electronic device 1 210 (e.g., operation 1517). For example, the scan request information may be transmitted through NAN communication or OOB communication.

According to an embodiment, the electronic device 101 may perform second scheduling for data communication with external electronic device 1 210 based on the first WLAN protocol, based on the configuration of a time interval for a scan based on the second WLAN protocol (e.g., operation 1519). For example, the electronic device 101 may transmit resource information (e.g., time resources) available for data communication based on the first WLAN protocol to external electronic device 1 210, based on the configuration of a time interval for a scan based on the second WLAN protocol. The electronic device 101 and external electronic device 1 210 may perform second scheduling for data communication with external electronic device 1 210 based on the first WLAN protocol, based on resource information (e.g., time resources) available for data communication based on the first WLAN protocol (e.g., operation 1519).

According to an embodiment, the electronic device 101 may perform a scan related to the second WLAN protocol, based on the configuration of a time interval for a scan based on the second WLAN protocol (e.g., operation 1521). For example, in case that the starting timepoint of a scan related to the second WLAN protocol arrives based on the configuration of a time interval for a scan based on the second WLAN protocol arrives, the electronic device 101 may perform a scan related to the second WLAN protocol regarding channels included in the first group for a time interval related to the second WLAN protocol.

According to an embodiment, external electronic device 1 210 may perform a scan related to the second WLAN protocol, based on configuration information of a time interval for a scan based on the second WLAN protocol received from the electronic device 101 (e.g., operation 1523). For example, in case that the starting timepoint of a scan related to the second WLAN protocol configured based on configuration information of a time interval for a scan based on the second WLAN protocol arrives, external electronic device 1 210 may perform a scan related to the second WLAN protocol regarding channels included in the second group for a time interval related to the second WLAN protocol.

According to an embodiment, external electronic device 1 210 may transmit, to the electronic device 101, a second WLAN protocol-related scan result, based on configuration information of a time interval for a scan based on the second WLAN protocol received from the electronic device 101 (e.g., operation 1525). For example, external electronic device 1 210 may transmit a scan result related to the second WLAN protocol to the electronic device 101 in case that the timepoint of acquisition of a scan result configured based on configuration information of a time interval for a scan based on the second WLAN protocol arrives. For example, the scan result related to the second WLAN protocol may be transmitted through NAN communication (e.g., SDF, NDP, or NAF) or OOB communication.

According to an embodiment, the electronic device 101 may output, through the output device, a second WLAN protocol-related scan result performed in the electronic device 101 and/or a second WLAN protocol-related scan result generated based on a second WLAN protocol-related scan result received from external electronic device 1 210.

According to an embodiment, the electronic device 101 and external electronic device 1 210 may perform data communication related to the first WLAN protocol, based on the second scheduling result, while performing a scan related to the second WLAN protocol. For example, the electronic device 101 and external electronic device 1 210 may perform data communication related to the first WLAN protocol through at least a part of the remaining time interval other than a time interval for a scan based on the second WLAN protocol between discovery windows.

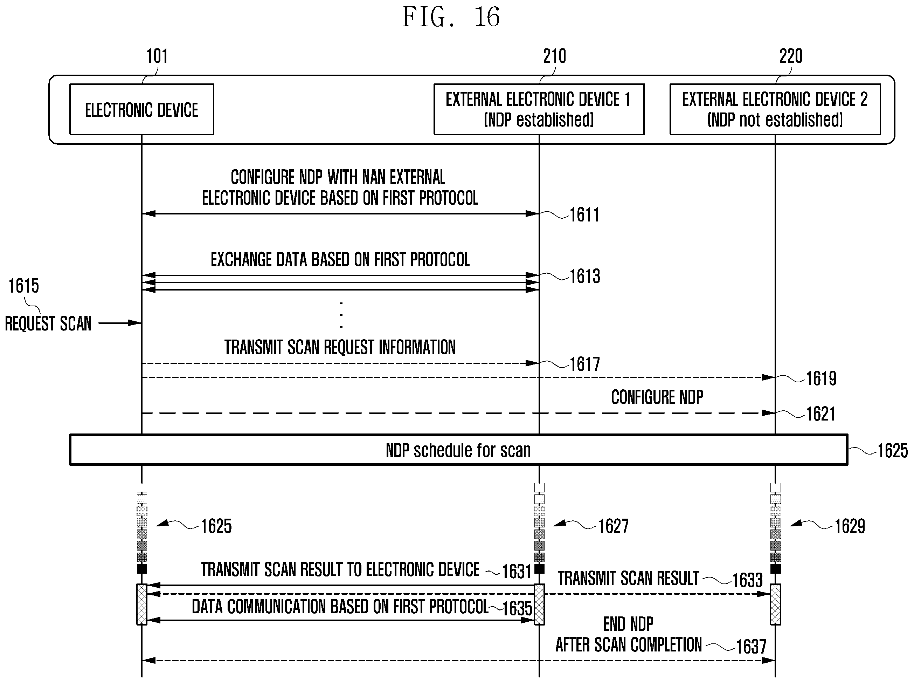

FIG. 16 illustrates an example for performing a search based on a second WLAN protocol with external electronic devices in an electronic device according to an embodiment.

Referring to FIG. 16, according to an embodiment, the electronic device 101 may configure a NAN data path (NDP), based on first scheduling for data communication, with external electronic device 1 210, based on a first WLAN protocol (e.g., NAN communication) (e.g., operation 1611). For example, the NAN data path may be configured based on information related to the setup of a NAN data path (NDP) acquired through a NAN action frame (NAF) transmitted and/or received within a discovery window. For example, the NAN data path may include a radio resource for data communication between the electronic device 101 and external electronic device 1 210 included in the same NAN cluster during an interval between discovery windows.

According to an embodiment, the electronic device 101 may perform at least one of data transmission or reception with external electronic device 1 210 through a NAN data path (NDP) configured based on first scheduling between discovery windows (e.g., operation 1613).

According to an embodiment, the electronic device 101 may identify whether an event related to a scan based on the second WLAN protocol occurs during data communication with external electronic device 1 210 based on the first WLAN protocol. For example, an event related to a scan based on the second WLAN protocol may occur based on execution of an application program or function related to the second WLAN protocol, reception of an input (e.g., a touch input, a gesture input, or a voice input) related to a scan based on the second WLAN protocol, or reception of a control signal related to a scan based on the second WLAN protocol. For example, the second WLAN protocol may be a heterogeneous WLAN protocol different from the first WLAN protocol, and may include at least one of WLAN-based direct communication (e.g., Wi-Fi direct), a mobile hotspot, or Wi-Fi legacy.

According to an embodiment, in case that an event related to a scan based on the second WLAN protocol occurs (e.g., operation 1615) during data communication with external electronic device 1 210 based on the first WLAN protocol, the electronic device 101 may identify external electronic devices (e.g., external electronic device 1 210 and/or external electronic device 2 220) included in an NAN cluster based on the first WLAN protocol. For example, the electronic device 101 may identify the existence of another external electronic device (e.g., external electronic device 2 220) included in the same NAN cluster as the electronic device 101 in addition to external electronic device 1 210 which perform data communication based on the first WLAN protocol.

For example, in case of identifying external electronic device 1 210 and external electronic device 2 220 included in the NAN cluster, the electronic device 101 may identify (or determine) whether to perform a scan related to the second WLAN protocol in cooperation with external electronic device 1 210 and external electronic device 2 220. For example, in case of determining that external electronic device 1 210 and external electronic device 2 220 support a cooperative scan related to the second WLAN protocol, based on the capability of external electronic device 1 210 and external electronic device 2 220, the electronic device 101 may determine to perform a scan for the second WLAN protocol in cooperation with external electronic device 1 210 and external electronic device 2 220. For example, in case of determining that external electronic device 1 210 and external electronic device 2 220 support a cooperative scan related to the second WLAN protocol, based on a cooperative scan-related identification request message and a response message corresponding to the cooperative scan-related identification request message, the electronic device 101 may determine to perform a scan for the second WLAN protocol in cooperation with external electronic device 1 210 and external electronic device 2 220.

For example, in case that information regarding the state of the channel with external electronic device 1 210 and external electronic device 2 220 satisfies a designated reference channel condition, the electronic device 101 may determine to perform a scan for the second WLAN protocol in cooperation with external electronic device 1 210 and external electronic device 2 220. For example, states in which the designated reference channel condition is satisfied may include states in which information regarding the state of the channel with external electronic device 1 210 and external electronic device 2 220 exceeds a designated reference channel value.

For example, in case that the distance from external electronic device 1 210 and external electronic device 2 220 satisfies a designated reference distance condition, the electronic device 101 may determine to perform a scan for the second WLAN protocol in cooperation with external electronic device 1 210 and external electronic device 2 220. For example, states in which the designated reference distance condition is satisfied may include states in which the distance between the electronic device 101 and external electronic device 1 210 and the distance between the electronic device 101 and external electronic device 2 220 are equal to or less than a designated reference distance.

For example, in case of determining to perform a scan based on the second WLAN protocol in cooperation with external electronic device 1 210 and external electronic device 2 220, the electronic device 101 may identify (or determine) a channel for a scan based on the second WLAN protocol in the electronic device 101, external electronic device 1 210, and external electronic device 2 220.

For example, the electronic device 101 may configure a time interval for a scan based on the second WLAN protocol, based on at least one of channel information (e.g., the number of channels of the first group) for performing a scan in the electronic device 101, channel information (e.g., the number of channels of the second group) for performing a scan in external electronic device 1 210, channel information (e.g., the number of channels of the third group) for performing a scan in external electronic device 2 220, the type of services provided through the first WLAN protocol, or the type of services provided through the second WLAN protocol. For example, the configuration of the time interval for a scan based on the second WLAN protocol may include a series of operations for determining at least one of the size of a time interval for a scan based on the second WLAN protocol, the scan starting timepoint, the scan ending timepoint, the scan cycle, or the timepoint at which a scan result is acquired in the electronic device 101. For example, at least one of the scan starting timepoint, the scan ending timepoint, the scan cycle, or the timepoint at which a scan result is acquired may be configured based on (or with reference to) a discovery window.

According to an embodiment, the electronic device 101 may transmit scan request information including configuration information of a time interval for a scan based on the second WLAN protocol to external electronic device 1 210 and external electronic device 2 220 (e.g., operation 1617 and operation 1619). For example, the scan request information may be transmitted through NAN communication or OOB communication.

According to an embodiment, the electronic device 101 may configure a NAN data path with external electronic device 2 220 (e.g., operation 1621). For example, the electronic device 101 may configure a NAN data path (NDP) with external electronic device 2 220, based on information related to the setup of a NAN data path acquired through a NAN action frame (NAF) transmitted and/or received within a discovery window.

According to an embodiment, the electronic device 101 may update the scheduling for data communication with external electronic device 1 210 and external electronic device 2 220 based on the first WLAN protocol, based on the configuration of a time interval for a scan based on the second WLAN protocol (e.g., operation 1623). For example, the electronic device 101 may transmit resource information (e.g., time resources) available for data communication based on the first WLAN protocol to external electronic device 1 210, based on the configuration of a time interval for a scan based on the second WLAN protocol. The electronic device 101 and external electronic device 1 210 may perform second scheduling for data communication with external electronic device 1 210 based on the first WLAN protocol, based on the resource information (e.g., time resources) available for data communication based on the first WLAN protocol (e.g., operation 1623).

For example, the electronic device 101 may transmit resource information (e.g., time resources) available for data communication based on the first WLAN protocol to external electronic device 2 220, based on the configuration of a time interval for a scan based on the second WLAN protocol. The electronic device 101 and external electronic device 2 220 may perform third scheduling for data communication with external electronic device 2 220 based on the first WLAN protocol, based on resource information (e.g., time resources) available for data communication based on the first WLAN protocol (e.g., operation 1623).

According to an embodiment, the electronic device 101 may perform a scan related to the second WLAN protocol, based on the configuration of a time interval for a scan based on the second WLAN protocol (e.g., operation 1625). For example, in case that the starting timepoint of a scan related to the second WLAN protocol configured based on configuration information of a time interval for a scan based on the second WLAN protocol arrives, the electronic device 101 may perform a scan related to the second WLAN protocol regarding channels included in the first group for a time interval related to the second WLAN protocol.

According to an embodiment, external electronic device 1 210 may perform a scan related to the second WLAN protocol, based on configuration information of a time interval for a scan based on the second WLAN protocol received from the electronic device 101 (e.g., operation 1627). For example, in case that the starting timepoint of a scan related to the second WLAN protocol configured based on configuration information of a time interval for a scan based on the second WLAN protocol arrives, external electronic device 1 210 may perform a scan related to the second WLAN protocol regarding channels included in the second group for a time interval related to the second WLAN protocol.

According to an embodiment, external electronic device 2 220 may perform a scan related to the second WLAN protocol, based on configuration information of a time interval for a scan based on the second WLAN protocol received from the electronic device 101 (e.g., operation 1629). For example, in case that the starting timepoint of a scan related to the second WLAN protocol configured based on configuration information of a time interval for a scan based on the second WLAN protocol arrives, external electronic device 2 220 may perform a scan related to the second WLAN protocol regarding channels included in the third group for a time interval related to the second WLAN protocol.

According to an embodiment, external electronic device 1 210 may transmit, to the electronic device 101, a second WLAN protocol-related scan result, based on configuration information of a time interval for a scan based on the second WLAN protocol received from the electronic device 101 (e.g., operation 1631). For example, external electronic device 1 210 may transmit a scan result related to the second WLAN protocol to the electronic device 101 in case that the timepoint of acquisition of a scan result configured based on configuration information of a time interval for a scan based on the second WLAN protocol arrives. For example, the scan result related to the second WLAN protocol may be transmitted through NAN communication (e.g., SDF, NDP, or NAF) or OOB communication.

According to an embodiment, external electronic device 2 220 may transmit, to the electronic device 101, a second WLAN protocol-related scan result, based on configuration information of a time interval for a scan based on the second WLAN protocol received from the electronic device 101 (e.g., operation 1633). For example, external electronic device 2 220 may transmit a scan result related to the second WLAN protocol to the electronic device 101 in case that the timepoint of acquisition of a scan result configured based on configuration information of a time interval for a scan based on the second WLAN protocol arrives. For example, the scan result related to the second WLAN protocol may be transmitted through NAN communication (e.g., SDF, NDP, or NAF) or OOB communication.

According to an embodiment, the electronic device 101 may output, through the output device, a second WLAN protocol-related scan result generated based on at least one of a second WLAN protocol-related scan result performed in the electronic device 101, a second WLAN protocol-related scan result received from external electronic device 1 210, or a second WLAN protocol-related scan result received from external electronic device 2 220.

According to an embodiment, the electronic device 101 and external electronic device 1 210 may perform data communication related to the first WLAN protocol, based on the second scheduling result, while performing a scan related to the second WLAN protocol. For example, the electronic device 101 and external electronic device 1 210 may perform data communication related to the first WLAN protocol through at least a part of the remaining time interval other than a time interval for a scan based on the second WLAN protocol between discovery windows.

According to an embodiment, in case that the scan related to the second WLAN protocol is ended, the electronic device 101 may update (or restore) the scheduling for data communication with external electronic device 1 210, based on the first WLAN protocol. For example, in case that the scan related to the second WLAN protocol is ended, the electronic device 101 may restore second scheduling related to data communication based on the first WLAN protocol to scheduling (e.g., first scheduling) before performing the scan based on the second WLAN protocol. The electronic device 101 and external electronic device 1 210 may perform data communication related to the first WLAN protocol, based on the first scheduling result (operation 1635).

According to an embodiment, in case that the scan related to the second WLAN protocol is ended, the electronic device 101 may release (or terminate) the NAN data path with external electronic device 220 (e.g., operation 1637).

According to an embodiment, the electronic device 101 may update scheduling for data communication with external electronic device 2 220, based on the second scheduling result for data communication with external electronic device 1 210, which is based on the first WLAN protocol.

According to an embodiment, after configuring a NAN data path with external electronic device 2 220, the electronic device 101 may transmit scan request information including configuration information of a time interval for a scan based on the second WLAN protocol to external electronic device 2 220.

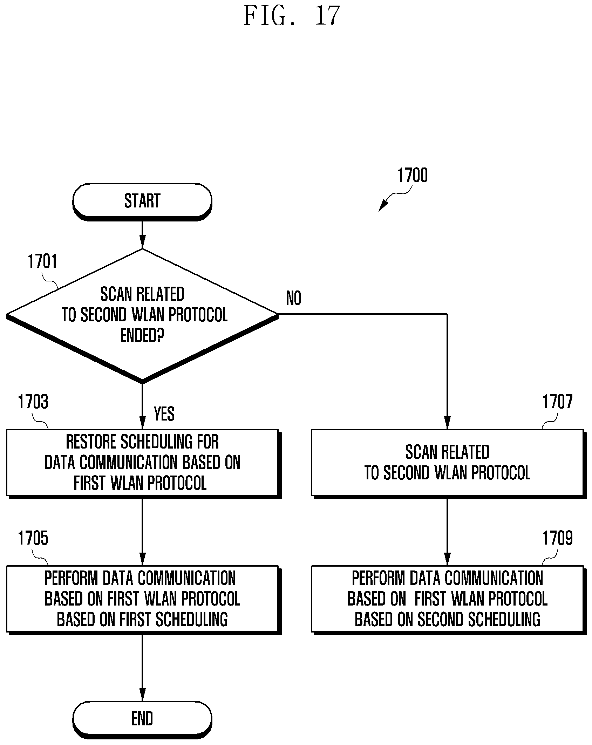

FIG. 17 is a flowchart 1700 for restoring scheduling for data communication based on a first WLAN protocol in an electronic device according to an embodiment. In the following embodiment, respective operations may be performed in sequence, but are not necessarily performed in sequence. For example, the order of respective operations may be changed, and at least two operations may be performed in parallel. For example, the electronic device in FIG. 17 may be the electronic device 101 in FIG. 1, FIG. 2, FIG. 3, FIG. 4, FIG. 5, or FIG. 6.

Referring to FIG. 17, according to an embodiment, in case of performing a scan related to the second WLAN protocol in cooperation with external electronic device 1 210 (e.g., operation 713 in FIG. 7), the electronic device (e.g., electronic device 101) or the processor (e.g., the processor 120 in FIG. 1 or the processor 500 in FIG. 5) may identify whether the scan related to the second WLAN protocol is terminated, in operation 1701. For example, the processor 500 may perform a scan related to a second WLAN protocol regarding channels included in a first group during data communication with external electronic device 1 210 based on the first WLAN protocol (e.g., operations 701 to 717 in FIG. 7). The processor 500 may identify whether the scan related to the second WLAN protocol is terminated. For example, termination of the scan related to the second WLAN protocol may include a state in which the scan of all channels related to the second WLAN protocol is completed, or a state in which an application program or function related to the second WLAN protocol is terminated.

According to an embodiment, in case that the scan based on the second WLAN protocol is terminated (e.g., "Yes" in operation 1701), the electronic device (e.g., the electronic device 101) or the processor (e.g., the processor 120 or 500) may restore scheduling for data communication with the external electronic device (e.g., external electronic device 1 210) based on the first WLAN protocol in operation 1703. For example, the processor 500 may restore the second scheduling related to data communication with external electronic device 1 210 based on the first WLAN protocol to the scheduling (e.g. first scheduling) before performing the scan based on the second WLAN protocol.

According to an embodiment, the electronic device (e.g., the electronic device 101) or the processor (e.g., the processor 120 or 500) may perform data communication with external electronic device 1 210 based on the first WLAN protocol, based on the restored first scheduling, in operation 1705.

According to an embodiment, in case that the scan based on the second WLAN protocol is not terminated (e.g., "No" in operation 1701), the electronic device (e.g., the electronic device 101) or the processor (e.g., the processor 120 or 500) may perform a scan related to the second WLAN protocol regarding the channels included in the first group, based on the configuration of a time interval related to the second WLAN protocol, in operation 1707.

According to an embodiment, the electronic device (e.g., the electronic device 101) or the processor (e.g., the processor 120 or 500) may perform data communication with the external electronic device (e.g., external electronic device 1 210) related to the first WLAN protocol, based on a second scheduling result related to the first WLAN protocol, in operation 1709.

According to an embodiment, a method for operating an electronic device (e.g., the electronic device 101 in FIG. 1, FIG. 2, FIG. 3, FIG. 4, FIG. 5, or FIG. 6) may include an operation of performing data communication based on NAN, based on a first scheduling, with a first external electronic device (e.g., external electronic device 1 210 in FIG. 2, FIG. 3, or FIG. 4). According to an embodiment, the method for operating an electronic device may include an operation of identifying an event related to a scan regarding multiple channels of a heterogeneous WLAN protocol during data communication based on NAN with the first external electronic device. According to an embodiment, the method for operating an electronic device may include an operation of identifying, based on an event, a first group of channels among channels for a scan of a heterogeneous WLAN protocol, and a second group of channels for performing a scan in the first external electronic device among channels for a scan of the heterogeneous WLAN protocol. According to an embodiment, the method for operating an electronic device may include an operation of configuring a time interval for a scan of the heterogeneous WLAN protocol, based on the first group of channels. According to an embodiment, the method for operating an electronic device may include an operation of performing second scheduling for data communication based on NAN with the first external electronic device, based on the configuration of a time interval for a scan of the heterogeneous WLAN protocol. According to an embodiment, the method for operating an electronic device may include an operation of transmitting information requesting a scan of the heterogeneous WLAN protocol regarding the second group of channels to the first external electronic device. According to an embodiment, the method for operating an electronic device may include an operation of performing a scan related to the first group of channels, based on the configuration of a time interval for a scan of the heterogeneous WLAN protocol. According to an embodiment, the method for operating an electronic device may include an operation of acquiring a scan result related to the second group of channels from the first external electronic device. According to an embodiment, the method for operating an electronic device may include an operation of performing data communication based on NAN with the first external electronic device, based on the second scheduling.

According to an embodiment, the information requesting a scan of the heterogeneous WLAN protocol may include at least one of information related to a channel included in the second group, the size of a time interval for a scan, the scan starting timepoint, the scan ending timepoint, a scan cycle, or the timepoint at which a scan result is acquired in the electronic device.

According to an embodiment, the information requesting a scan of the heterogeneous WLAN protocol may be transmitted to the first external electronic device through NAN communication or out of band (OOB) communication.

According to an embodiment, the scan result related to the second group of channels may be acquired from the first external electronic device through NAN communication or out-of-band (OOB) communication.

According to an embodiment, the method for operating an electronic device may include an operation of outputting at least one of a scan result related to the first group of channels in the electronic device or a scan result related to the second group of channels.

According to an embodiment, the operation of configuring a time interval for a scan of the heterogeneous WLAN protocol may include an operation of configuring the size of a time interval for a scan of the heterogeneous WLAN protocol, based on at least one of a service type based on NAN with the first external electronic device or a service type related to the heterogeneous WLAN protocol.

According to an embodiment, the operation of configuring a time interval for a scan of the heterogeneous WLAN protocol may include an operation of configuring at least one of the scan ending timepoint or the scan cycle, based on at least one of the size of a time interval for a scan of the heterogeneous WLAN protocol, channels included in the first group, or channels included in the second group.

According to an embodiment, the method for operating an electronic device may include an operation of, in case that a scan of the heterogeneous WLAN protocol is ended, restoring second scheduling for data communication based on NAN with the first external electronic device to first scheduling.

According to an embodiment, the first group of channels may include at least some consecutive channels among multiple channels for a scan of the heterogeneous WLAN protocol. According to an embodiment, the second group of channels may include the remaining consecutive channels other than the first group of channels among the multiple channels for a scan of the heterogeneous WLAN protocol.

The embodiments of the disclosure described in the specification and the drawings are merely specific examples presented to easily describe the technical content according to the embodiments of the disclosure and to help understanding the embodiments of the disclosure, and are not intended to limit the scope of the embodiments of the disclosure. Therefore, the scope of the embodiments of the disclosure should be interpreted as encompassing all changed or modified forms derived from the technical idea of the embodiments of the disclosure, in addition to the embodiments disclosed herein.

## Claims

1. An electronic device (101) comprising:
communication circuitry (192 or 510);
at least one processor (120 or 500) including processing circuitry, and
memory storing instructions
wherein the instructions, when executed by the at least one processor (120 or 500) individually or collectively, cause the electronic device (101) to:
perform, via the communication circuitry (192 or 510), data communication based on neighbor awareness networking (NAN) based on first scheduling with a first external electronic device;
identify an event related to a scan regarding multiple channels of a heterogeneous WLAN protocol during the data communication based on NAN with the first external electronic device;
identify, based on the event, a first group of channels for performing a scan in the electronic device, among multiple channels for a scan of the heterogeneous WLAN protocol, and a second group of channels for performing a scan in the first external electronic device, among multiple channels for a scan of the heterogeneous WLAN protocol;
configure a time interval for a scan of the heterogeneous WLAN protocol regarding the first group of channels;
perform second scheduling for data communication based on NAN with the first external electronic device, based on configuration of a time interval for a scan of the heterogeneous WLAN protocol;
transmit, via the communication circuitry (192 or 510), information requesting a scan of the heterogeneous WLAN protocol regarding the second group of channels to the first external electronic device;
perform a scan related to the first group of channels, based on configuration of a time interval for a scan of the heterogeneous WLAN protocol;
acquire a scan result related to the second group of channels from the first external electronic device; and
perform data communication based on NAN with the first external electronic device, based on the second scheduling.

2. The electronic device of claim 1, wherein information requesting a scan of the heterogeneous WLAN protocol comprises at least one of information related to a channel included in the second group, the size of a time interval for a scan, a scan starting timepoint, a scan ending timepoint, a scan cycle, or a timepoint of acquisition of a scan result in the electronic device.

3. The electronic device of claim 1, wherein information requesting a scan of the heterogeneous WLAN protocol is transmitted to the first external electronic device through NAN communication or out-of-band (OOB) communication.

4. The electronic device of claim 1, wherein a scan result related to the second group of channels is acquired from the first external electronic device through NAN communication or out of band (OOB) communication.

5. The electronic device of claim 1, wherein the instructions, when executed by the at least one processor individually or collectively, cause the electronic device to output at least one of a scan result related to the first group of channels or a scan result related to the second group of channels acquired from the first external electronic device.

6. The electronic device of claim 1, wherein the instructions, when executed by the at least one processor individually or collectively, cause the electronic device to configure the size of a time interval for a scan of the heterogeneous WLAN protocol, based on at least one of a service type based on NAN with the first external electronic device or a service type related to the heterogeneous WLAN protocol.

7. The electronic device of claim 6, wherein the instructions, when executed by the at least one processor individually or collectively, cause the electronic device to configure at least one of a scan ending timepoint or a scan cycle, based on at least one of the size of a time interval for a scan of the heterogeneous WLAN protocol, channels included in the first group, or channels included in the second group.

8. The electronic device of claim 1, wherein the instructions, when executed by the at least one processor individually or collectively, cause the electronic device to, in case that a scan of the heterogeneous WLAN protocol is terminated, restore the second scheduling for data communication based on NAN with the first external electronic device to the first scheduling.

9. A method for operating an electronic device (101), the method comprising:
performing data communication based on neighbor awareness networking (NAN) based on first scheduling with a first external electronic device;
identifying an event related to a scan regarding multiple channels of a heterogeneous WLAN protocol during data communication based on NAN with the first external electronic device;
identifying, based on the event, a first group of channels, among multiple channels for a scan of the heterogeneous WLAN protocol, and a second group of channels for performing a scan in the first external electronic device, among multiple channels for a scan of the heterogeneous WLAN protocol;
configuring a time interval for a scan of the heterogeneous WLAN protocol regarding the first group of channels;
performing second scheduling for data communication based on NAN with the first external electronic device, based on configuration of a time interval for a scan of the heterogeneous WLAN protocol;
transmitting information requesting a scan of the heterogeneous WLAN protocol regarding the second group of channels to the first external electronic device;
performing a scan related to the first group of channels, based on configuration of a time interval for a scan of the heterogeneous WLAN protocol;
acquiring a scan result related to the second group of channels from the first external electronic device; and
performing data communication based on NAN with the first external electronic device, based on the second scheduling.

10. The method of claim 9, further comprising outputting at least one of a scan result related to the first group of channels or a scan result related to the second group of channels acquired from the first external electronic device.

11. The method of claim 9, wherein the configuring of a time interval for a scan of the heterogeneous WLAN protocol comprises configuring the size of a time interval for a scan of the heterogeneous WLAN protocol, based on at least one of a service type based on NAN with the first external electronic device or a service type related to the heterogeneous WLAN protocol.

12. The method of claim 11, further comprising configuring at least one of a scan ending timepoint or a scan cycle, based on at least one of the size of a time interval for a scan of the heterogeneous WLAN protocol, channels included in the first group, or channels included in the second group.

13. The method of claim 9, further comprising, in case that a scan of the heterogeneous WLAN protocol is terminated, restoring second scheduling for data communication based on NAN with the first external electronic device to the first scheduling.

14. The method of claim 9, wherein the first group of channels comprise at least some consecutive channels among multiple channels for a scan of the heterogeneous WLAN protocol, and
wherein the second group of channels comprise remaining consecutive channels other than the first group of channels among multiple channels for a scan of the heterogeneous WLAN protocol.

15. A non-transitory computer-readable storage medium storing one or more programs, the one or more programs comprising instructions which, when executed by a processor of an electronic device, cause the electronic device to:
perform data communication based on neighbor awareness networking (NAN) based on first scheduling with a first external electronic device;
identify an event related to a scan regarding multiple channels of a heterogeneous WLAN protocol during data communication based on NAN with the first external electronic device;
identify, based on the event, a first group of channels, among multiple channels for a scan of the heterogeneous WLAN protocol, and a second group of channels for performing a scan in the first external electronic device, among multiple channels for a scan of the heterogeneous WLAN protocol;
configure a time interval for a scan of the heterogeneous WLAN protocol regarding the first group of channels;
perform second scheduling for data communication based on NAN with the first external electronic device, based on configuration of a time interval for a scan of the heterogeneous WLAN protocol;
transmit information requesting a scan of the heterogeneous WLAN protocol regarding the second group of channels to the first external electronic device;
perform a scan related to the first group of channels, based on configuration of a time interval for a scan of the heterogeneous WLAN protocol;
acquire a scan result related to the second group of channels from the first external electronic device; and
perform data communication based on NAN with the first external electronic device, based on the second scheduling.
